(19) Europäisches Patentamt
European Patent Office
Office européen des brevets

(11) **EP 3 616 823 A1**

(12) **EUROPÄISCHE PATENTANMELDUNG**

(43) Veröffentlichungstag:
**04.03.2020 Patentblatt 2020/10**

(51) Int Cl.:
***B23K 9/10*** *(2006.01)*    ***B23K 9/173*** *(2006.01)*

(21) Anmeldenummer: **18191800.4**

(22) Anmeldetag: **30.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fronius International GmbH**
**4643 Pettenbach (AT)**

(72) Erfinder:
• **Artelsmair, Josef**
**4643 Pettenbach (AT)**

• **Söllinger, Dominik**
**4643 Pettenbach (AT)**
• **Muss, Michael**
**4643 Pettenbach (AT)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(54) **VERFAHREN ZUM KOMPENSIEREN EINER STÖRENDEN BEEINFLUSSUNG EINES SCHWEISSSTROMES DURCH EINE ANDERE SCHWEISSSTROMQUELLE**

(57) Verfahren zum Kompensieren einer störenden Beeinflussung eines von einer Schweißstromquelle (4) zum Schweißen eines Werkstückes (3) bereitgestellten Schweißstromes durch eine andere Schweißstromquelle (4'),
mit den Schritten:
(d) Bereitstellen (SA) einer Kompensationsspannung ($U_{Komp}$), die auf Basis eines von der anderen Schweißstromquelle (4') bereitgestellten Schweißstromverlaufes berechnet wird;
(e) Subtrahieren (SB) der Kompensationsspannung ($U_{Komp}$) von einer durch eine Spannungsmesseinheit (8) der Schweißstromquelle (4) gemessenen Messspannung ($U_{Mess}$) zur Ermittlung einer bereinigten Messspannung ($U'_{Mess}$); und
(f) Regeln (SC) des von der Schweißstromquelle (4) erzeugten Schweißstromes in Abhängigkeit von der bereinigten Messspannung ($U'_{Mess}$).

FIG. 6

EP 3 616 823 A1

**Beschreibung**

Die Erfindung betrifft ein Verfahren zum Ermitteln einer störenden Kopplung zwischen Schweißstromkreisen einer Schweißanlage sowie ein Verfahren zur Kompensation dieser störenden Kopplung.

Eine Schweißanlage kann einen oder mehrere Schweißstromkreise umfassen, die zum Schweißen mindestens eines Werkstückes eingesetzt werden. Jeder der Schweißstromkreise verfügt über eine Schweißstromquelle, die einen Schweißstrom zum Schweißen des Werkstückes bereitstellt. Die Schweißstromquellen führen in dem Schweißstromkreis einer abschmelzbaren Schweißdrahtelektrode Strom zu, wobei zwischen der Spitze der Schweißdrahtelektrode und der Oberfläche des Werkstückes ein Lichtbogen entsteht. Die Schweißdrahtelektrode wird je nach Schweißverfahrensvariante und eingestellten Schweißparametern durch den Lichtbogen in unterschiedlicher Weise abgeschmolzen.

Beim Schweißen mit Impulslichtbogen wird einer Grundspannung regelmäßig eine erhöhte Impulsspannung überlagert, wodurch sich mit vorgegebener Frequenz und Impulszeit ein Grundstrom und ein Impulsstrom abwechseln.

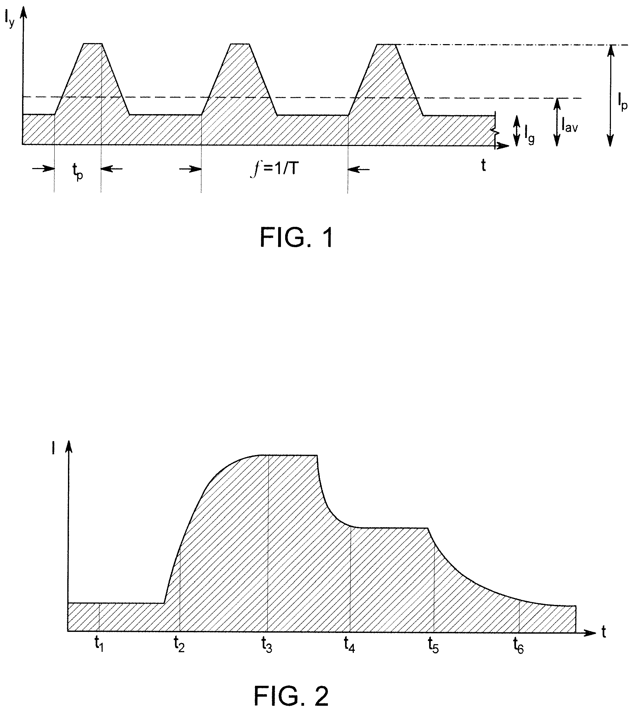

Fig. 1 zeigt den schematischen Stromverlauf bei einem Impulsschweißprozesses über die Zeit t. Wie in Fig. 1 erkennbar, wird bei diesem Schweißprozess der Schweißstrom I impulsförmig auf hohe Werte angehoben. Der Materialtransport in das Schmelzbad erfolgt aufgrund der Stromimpulse. Während der Grundstromphase brennt der Lichtbogen mit geringer Leistung, wobei der Zusatzwerkstoff bzw. die Schweißdrahtelektrode angeschmolzen wird und das Schweißbad flüssig gehalten wird. Während der Impulsphase bildet sich ein Tropfen, der durch magnetische Einschnürung abgelöst wird. Beim Impulslichtbogenschweißen kann die Wärmeeinbringung in das Werkstück reduziert und gesteuert werden. Hierdurch können dünne Werkstückbleche mit dickeren Schweißdrahtelektroden geschweißt werden, wobei die Abschmelzleistung höher ist und Spritzer während des Schweißprozesses weitgehend reduziert werden können.

Der in Fig. 1 dargestellte Verlauf der Schweißstromstärke zeigt eine Grundstromamplitude $I_g$, eine Pulsstromamplitude $I_p$ für einen Stromimpuls, der eine Pulsdauer $t_p$ besitzt. Die Stromimpulse werden mit einer Impulsfrequenz f entsprechend einer Periodendauer T angelegt. Fig. 1 zeigt ferner einen Schweißstrommmittelwert $I_{av}$.

Fig. 2 zeigt eine Periode eines Impulsschweißprozesses. Der Lichtbogen brennt zunächst ($t_1$) mit kleiner Grundstromstärke. Mit Erhöhung des Stromes ($t_2$) wird das Drahtende der Schweißdrahtelektrode zunächst angeschmolzen. Sobald der Strom den Pulsstromwert $I_p$ erreicht hat ($t_3$), wird das Drahtende der Schweißdrahtelektrode stark angeschmolzen und es bildet sich ein Tropfen aus. Dieser wird durch den magnetischen Pincheffekt eingeschnürt. Der Strom wird anschließend auf einen niedrigeren Stromwert reduziert ($t_4$), wobei der gebildete Tropfen weiter eingeschnürt wird und in Richtung auf das Schmelzbad beschleunigt wird. Zum Zeitpunkt $t_5$ hat sich der Tropfen vom Drahtende der Schweißdrahtelektrode gelöst. Der Schweißstrom I wird anschließend wieder auf den Grundstromwert ($t_6$) abgesenkt, wie in Fig. 2 erkennbar.

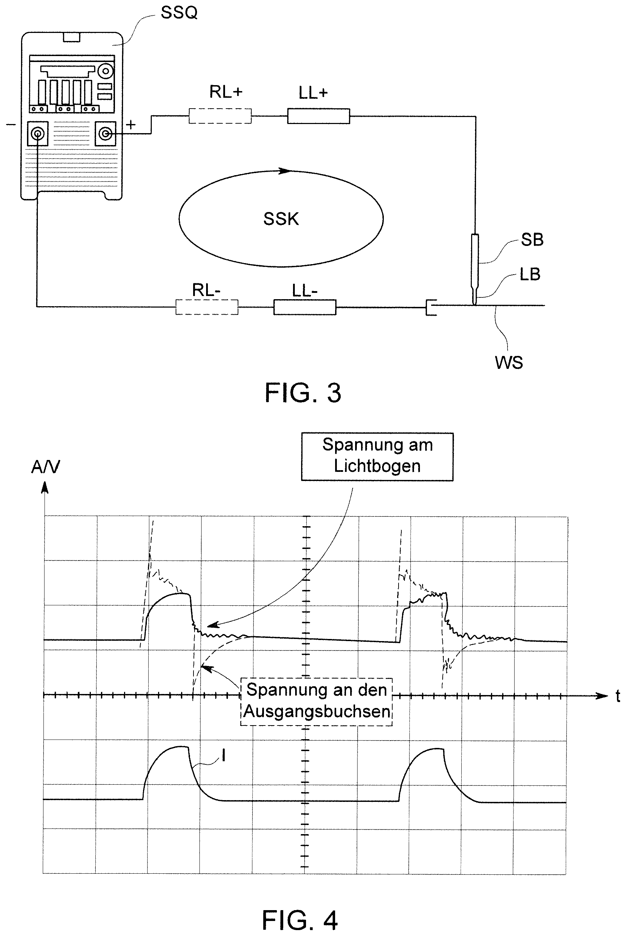

Fig. 3 zeigt einen herkömmlichen Schweißstromkreis SSK einer Schweißanlage. Der Schweißstromkreis SSK umfasst sämtliche Leitungen und Verbindungen von einem Pluspol bis zu einem Minuspol der Schweißstromquelle SSQ. Der Schweißstromkreis SSK wird von einem Schweißstrom I durchflossen. Die Hin- und Rückleitung des Schweißstromkreises SSK ist jeweils mit einem Widerstand R und einer Induktivität L behaftet, wie in Fig. 3 schematisch dargestellt. Der Schweißstromkreiswiderstand R wird dabei durch die Summe aller Widerstände sämtlicher von Schweißstrom I durchflossenen Leitungen und Verbindungen gebildet. Der Schweißstromkreiswiderstand R lässt sich in folgende Teilwiderstände unterteilen, nämlich in einen Widerstand der Masseleitung RL-, einen Widerstand der durch das Schlauchpaket verlaufenden Leitung RL+ sowie Übergangswiderstände an den Klemmstellen. Die Widerstände der Schweißleitungen, d. h. der Widerstand der Masseleitung und der Widerstand der durch das Schlauchpaket verlaufenden Leitung, werden vom Querschnitt der Leitung und vom Leiterwerkstoff bestimmt und verändern sich unter normalen Umständen nicht. Demgegenüber kann sich der Übergangswiderstand der Klemmstellen relativ stark ändern, beispielsweise durch Oxidation oder lockere Klemmstellen.

Unter der Schweißkreisinduktivität L des Schweißstromkreises SSK versteht man die Eigenschaft des Schweißstromkreises, jeder Stromänderung einen dynamischen Widerstand entgegenzusetzen. Dieser dynamische Widerstand wird umso größer, je größer die Schweißkreisinduktivität des Schweißstromkreises SSK ist.

Sowohl der Schweißkreiswiderstand R als auch die Schweißkreisinduktivität L des Schweißstromkreises SSK haben Auswirkungen auf den Schweißprozess. Ändert sich beispielsweise der Schweißkreiswiderstand R, ändert sich auch die Lichtbogenlänge.

Weiterhin hat auch eine Änderung der Schweißstromkreisinduktivität L Auswirkungen auf den Schweißprozess wie in Fig. 4 dargestellt. Fig. 4 zeigt einen Spannungsverlauf am Lichtbogen LB und an den Ausgangsbuchsen der Schweißstromquelle sowie einen Verlauf des Schweißstromes I über die Zeit während einer Periode eines Impulsschweißprozesses. Bei einem Schweißverfahren können verschiedene Modulationsarten eingesetzt werden, insbesondere eine sogenannte Ig/Ip-Modulation und eine Ig/Up-Modulation. Bei der Ig/Ip-Modulation entspricht der Schweißstrom I zu jedem Zeitpunkt einer Periode exakt dem vorgegebenen Schweißstrom-Sollwert. Bei einer Stromerhöhung vom Grundstrom auf den Pulsstrom stellt sich daher die notwendige Spannung, die erforderlich ist, um den Strom über die Schweißkreisinduktivität L zu treiben, selbständig ein. Dies hat gegenüber der Ig/Up-Modulation den Vorteil, dass die Schweißkreisinduktivität L den Stromanstieg nicht beeinflusst. Bei der Ig/Up-Modulation hingegen ändert sich der Stromanstieg mit der Schweißkreisinduktivität L des Schweißstromkreises SSK, da die Pulsspannung dieser Modulation konstant gehalten wird. Bei der Ig/Ip-Modulation kann die Stromanstiegsgeschwindigkeit jedoch nur dann konstant gehalten werden, falls von der Schweißstromquelle SSQ des Schweißstromkreises SSK genügend Spannung geliefert wird. Diese Grenze ist jedoch dann erreicht, wenn die Summe der einzelnen Spannungen in dem Schweißstromkreis SSK die maximale Ausgangsspannung der Schweißstromquelle SSQ übersteigt. Der Schweißstromanstieg wird dann langsamer und verändert den Schweißprozess.

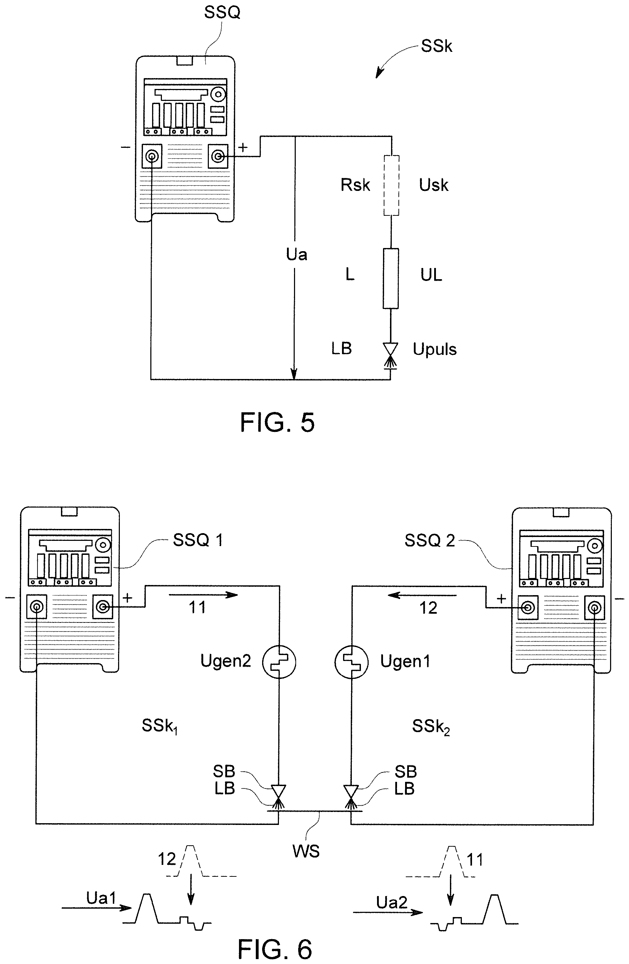

Fig. 5 zeigt schematisch die Zusammensetzung der Spannung in einem herkömmlichen Schweißstromkreis SSK. Die Spannung $U_a$, d. h. die Spannung an den Ausgangsanschlüssen der Stromquelle, setzt sich aus den Teilspannungen $U_{sk}$, $U_L$ und $U_{puls}$ zusammen, wobei

$$U_{sk} = I_p \cdot R_{sk},$$

$$U_L = L \cdot di/dt$$

und $U_{puls}$ abhängig vom eingesetzten Schutzgas, dem Werkstoff sowie der Lichtbogenlänge ist.

Die Spannung $U_{sk}$ ist abhängig vom Schweißkreiswiderstand R und dem Pulsstrom $I_p$.

Die Spannung $U_L$ ist abhängig von der Induktivität L sowie der Stromänderungsgeschwindigkeit di/dt.

Werden in einer Schweißanlage mehrere Schweißstromquellen SSQ eingesetzt, wie in Fig. 6 schematisch dargestellt, kommt es zu einer Kopplung zwischen den Schweißstromkreisen SSK. Die Stromleitungen einer Schweißstromquelle SSQ stellen eine Leiterschleife dar, die eine bestimmte Fläche einschließt. Sobald sich zwei derartige Felder bzw. Flächen überdecken, so wird bei einer Änderung des Stromes I in einer Leiterschleife in der zweiten Leiterschleife eine Spannung U induziert. Die induzierte Spannung U ist umso größer, je mehr sich die beiden Flächen bzw. Felder überdecken und je kleiner der Abstand der beiden Felder bzw. Schleifen zueinander ist. Die verschiedenen Schweißstromkreise SSK der Schweißanlage verhalten sich gewissermaßen wie Transformatoren mit schlechter Kopplung.

Die Kopplung zwischen den Schweißstromkreisen SSK der Schweißanlage haben Auswirkungen auf das Prozessverhalten beim Schweißen. Bei jedem an einem Schweißstromkreis SSK angelegten Stromimpuls wird in einer Leitung des anderen Schweißstromkreises SSK eine Spannung U induziert. Dies erfolgt in beiden Richtungen, d. h. bidirektional. Die in den Schweißstromkreis SSK induzierte Spannung U bewirkt in der jeweils anderen Schweißstromquelle einen Stromfluss, dessen Wirkung sich wie eine Widerstandsänderung im Lichtbogen LB verhält. In den Schweißstromkreis SSK wird gewissermaßen eine zusätzliche Spannungsquelle geschaltet, die von der jeweils anderen Schweißstromquelle SSQ gesteuert wird, wie in Fig. 6 schematisch dargestellt. Da die beiden Schweißstromquellen SSQ nicht synchron arbeiten und insbesondere verschiedene Pulsfrequenzen aufweisen, kann es zu Schwebungen bzw. Schwankungen der Lichtbogenlänge kommen. Bei kleinen Frequenzunterschieden der Pulsfrequenzen macht sich dies am stärksten bemerkbar.

Um eine gegenseitige Beeinflussung von Schweißstromkreisen SSK einer Schweißanlage geringzuhalten, wird herkömmlicherweise versucht, durch enge parallele Verlegung der Leitungen des Schweißstromkreises SSK die jeweilige Induktionsfläche zu minimieren. Weiterhin wird herkömmlicherweise versucht, die Schweißstromkreise SSK räumlich zu trennen.

Diese herkömmliche Vorgehensweise ist allerdings in vielen Fällen praktisch nicht durchführbar, da aufgrund der bestehenden Produktionsbedingungen eine entsprechende Verlegung der Leitungen der verschiedenen Schweißstromkreise SSK der Schweißanlage nicht möglich ist. Zudem besteht in vielen Fällen weder das Wissen noch das Bewusstsein, die Leitungen der Schweißstromkreise SSK entsprechend zu verlegen. Darüber hinaus kann selbst bei geeigneter Verlegung der Leitungen der Schweißstromkreise SSK kaum abgeschätzt werden, inwieweit die Kopplung zwischen den Schweißstromkreisen SSK hierdurch vermindert worden ist und inwieweit die verbleibende Restkopplung weiterhin den Schweißprozess an dem Werkstück WS negativ beeinflusst.

Es ist daher eine Aufgabe der vorliegenden Erfindung, ein Verfahren zum Kompensieren einer störenden Beeinflussung eines von einer Schweißstromquelle zum Schweißen eines Werkstückes bereitgestellten Schweißstromes durch eine andere Schweißstromquelle zu schaffen.

Diese Aufgabe wird erfindungsgemäß durch ein Verfahren mit den in Patentanspruch 1 angegebenen Merkmalen gelöst.

Die Erfindung schafft demnach ein Verfahren zum Kompensieren einer störenden Beeinflussung eines von einer Schweißstromquelle (Empfängerschweißstromquelle) zum Schweißen eines Werkstückes bereitgestellten Schweißstromes durch eine andere Schweißstromquelle (Senderschweißstromquelle), wobei dieses Kompensationsverfahren die folgenden Schritte umfasst: Bereitstellen einer Kompensationsspannung, die auf Basis eines von der anderen Schweißstromquelle (Senderschweißstromquelle) bereitgestellten Schweißstromverlaufes berechnet wird, Subtrahieren der Kompensationsspannung von einer durch eine Spannungsmesseinheit der Schweißstromquelle (Empfängerschweißstromquelle) gemessenen Messspannung zur Ermittlung einer bereinigten Messspannung und Regeln des von der Schweißstromquelle (Empfängerschweißstromquelle) erzeugten Schweißstromes in Abhängigkeit von der bereinigten Messspannung.

Bei einer möglichen Ausführungsform des erfindungsgemäßen Kompensationsverfahrens zum Kompensieren einer störenden Beeinflussung eines von einer Schweißstromquelle zum Schweißen eines Werkstückes bereitgestellten Schweißstromes durch eine zum Schweißen des gleichen oder eines anderen Werkstückes eingesetzte andere Schweißstromquelle (Senderschweißstromquelle) wird die Kompensationsspannung auf Basis eines Stromprofiles des von der anderen Schweißstromquelle (Senderschweißstromquelle) bereitgestellten Schweißstromverlaufes und auf Basis gespeicherter Koppelfaktoren berechnet.

Bei einer weiteren möglichen Ausführungsform des erfindungsgemäßen Kompensationsverfahrens weisen die gespeicherten Koppelfaktoren einen Ohmschen Koppelfaktor und mindestens einen induktiven Koppelfaktor auf.

Bei einer weiteren möglichen Ausführungsform des erfindungsgemäßen Kompensationsverfahrens wird das Stromprofil des Schweißstromverlaufes der anderen Schweißstromquelle (Senderschweißstromquelle) aus einem Stromprofilspeicher bzw. Datenspeicher der Schweißstromquelle (Empfängerschweißstromquelle) ausgelesen.

Hierzu erfolgt vorzugsweise eine entsprechende Synchronisation des Stromverlaufes der Senderschweißstromquelle mit den in der Empfängerschweißstromquelle gespeicherten Stromverlaufsdaten.

Bei einer weiteren möglichen Ausführungsform des erfindungsgemäßen Kompensationsverfahrens wird das Stromprofil des Schweißstromverlaufes der anderen Schweißstromquelle Senderschweißstromquelle von der anderen Schweißstromquelle Senderschweißstromquelle drahtlos oder drahtgebunden an die Berechnungseinheit der Schweißstromquelle (Empfängerschweißstromquelle) übertragen.

Bei einer weiteren möglichen Ausführungsform des erfindungsgemäßen Kompensationsverfahrens umfasst das Stromprofil des Schweißstromverlaufes der anderen Schweißstromquelle (Senderschweißstromquelle) Strompegelwerte und Strompegeländerungen mit zugehörigen Zeitwerten.

Bei einer weiteren möglichen Ausführungsform des erfindungsgemäßen Kompensationsverfahrens wird die von einer Berechnungseinheit der Schweißstromquelle (Empfängerschweißstromquelle) berechnete Kompensationsspannung durch eine Kompensationseinheit der Schweißstromquelle (Empfängerschweißstromquelle) laufend von der durch die Spannungsmesseinheit der Schweißstromquelle (Empfängerschweißstromquelle) gemessenen Messspannung zur Ermittlung der bereinigten Messspannung subtrahiert.

Bei einer weiteren möglichen Ausführungsform des erfindungsgemäßen Kompensationsverfahrens wird der mittels der bereinigten Messspannung durch eine Regelungseinheit geregelte Schweißstrom über eine Schweißstromleitung der Schweißstromquelle (Empfängerschweißstromquelle) einem Schweißbrenner zum Schweißen des Werkstückes zugeleitet.

Die Erfindung schafft gemäß einem weiteren Aspekt eine Schweißstromquelle zur Erzeugung eines Schweißstromes, der über eine Schweißstromleitung einem Schweißbrenner zum Schweißen eines Werkstückes zuführbar ist, wobei die Schweißstromquelle aufweist:

eine Berechnungseinheit, welche geeignet ist, eine Kompensationsspannung in Abhängigkeit eines Schweißstromverlaufes einer anderen zum Schweißen des gleichen oder eines anderen Werkstückes eingesetzten Schweißstromquelle zu berechnen und

eine Kompensationseinheit, welche geeignet ist, die von der Berechnungseinheit berechnete Kompensationsspannung von einer durch eine Spannungsmesseinheit der Schweißstromquelle gemessenen Messspannung zur Ermittlung einer bereinigten Messspannung zu subtrahieren, die durch eine Regelungseinheit der Schweißstromquelle zur Regelung des von der Schweißstromquelle erzeugten Schweißstromes verwendet wird.

Bei einer möglichen Ausführungsform der erfindungsgemäßen Schweißstromquelle berechnet die Berechnungseinheit der Schweißstromquelle die Kompensationsspannung auf Basis eines Stromprofiles des von der anderen Schweißstromquelle (Senderschweißstromquelle) bereitgestellten Schweißstromes sowie auf Basis von Koppelfaktoren, die in einem Datenspeicher oder einer Datenbank gespeichert sind.

Bei einer weiteren möglichen Ausführungsform der erfindungsgemäßen Schweißstromquelle umfasst das Stromprofil des Schweißstromes der anderen Schweißstromquelle (Senderschweißstromquelle) Strompegelwerte und Strompegeländerungen mit zugehörigen Zeitwerten.

Bei einer weiteren möglichen Ausführungsform der erfindungsgemäßen Schweißstromquelle wird ein Stromprofil des Schweißstromes der anderen Schweißstromquelle über eine drahtlose oder drahtgebundene Schnittstelle der Schweißstromquelle von der anderen Schweißstromquelle (Senderschweißstromquelle) empfangen oder synchronisiert aus einem Stromprofilspeicher der Schweißstromquelle ausgelesen.

Bei einer weiteren möglichen Ausführungsform der erfindungsgemäßen Schweißstromquelle weist die zur Berechnung der Kompensationsspannung vorgesehene Berechnungseinheit der Schweißstromquelle auf:

einen ersten Multiplizierer, der einen aktuellen Strompegelwert innerhalb des Stromprofiles mit einem Ohmschen Koppelfaktor zur Berechnung eines Ohmschen Anteils der Kompensationsspannung multipliziert,
einen zweiten Multiplizierer, der eine aktuelle Strompegeländerung innerhalb des Stromprofiles mit einem induktiven Koppelfaktor zur Berechnung eines induktiven Anteils der Kompensationsspannung multipliziert und
einen Summierer, der den Ohmschen Anteil der Kompensationsspannung und den induktiven Anteil der Kompensationsspannung zur Berechnung der Kompensationsspannung addiert.

Die Erfindung schafft ferner eine Schweißanlage mit mindestens zwei Schweißstromquellen, die zum Schweißen von einem oder mehreren Werkstücken gemeinsam betrieben werden, wobei jede der Schweißstromquellen zur Erzeugung eines Schweißstromes vorgesehen sind, der über eine Schweißstromleitung einen Schweißbrenner zum Schweißen einer oder der mehreren Werkstücke zuführbar ist, wobei jede der Schweißstromquellen aufweist:

eine Berechnungseinheit, welche geeignet ist, eine Kompensationsspannung in Abhängigkeit eines Schweißstromverlaufes einer anderen Schweißstromquelle der Schweißanlage zu berechnen und
eine Kompensationseinheit, welche geeignet ist, die von der Berechnungseinheit berechnete Kompensationsspannung von einer durch eine Spannungsmesseinheit der Schweißstromquelle gemessenen Messspannung zur Ermittlung einer bereinigten Messspannung zu subtrahieren, die durch eine Regelungseinheit der jeweiligen Schweißstromquelle zur Regelung des von dieser Schweißstromquelle erzeugten Schweißstromes verwendet wird.

Im Weiteren werden mögliche Ausführungsformen der verschiedenen Aspekte der Erfindung unter Bezugnahme auf die beigefügten Figuren näher erläutert.

Es zeigen:

Fig. 1        einen Stromverlauf bei einem herkömmlichen Impulsschweißprozess;

Fig. 2        den Stromverlauf während einer Periode des in Fig. 1 dargestellten Impulsschweißprozesses;

Fig. 3        eine schematische Darstellung eines herkömmlichen Schweißstromkreises;

Fig. 4        einen Spannungs- und Stromverlauf einer Periode eines herkömmlichen Impulsschweißprozesses;

Fig. 5        eine schematische Darstellung zur Erläuterung der Zusammensetzung der Spannung bei einem herkömmlichen Schweißstromkreis;

Fig. 6        eine schematische Darstellung einer Kopplung zwischen verschiedenen Schweißstromkreisen zur Erläuterung eines der Erfindung zugrunde liegenden technischen Problems;

Fig. 7        ein einfaches Ablaufdiagramm zur Darstellung eines Ausführungsbeispiels eines Verfahrens zum Ermitteln einer störenden Kopplung zwischen Schweißstromkreisen einer Schweißanlage gemäß einem ersten Aspekt der Erfindung;

Fig. 8A, 8B        eine schematische Darstellung einer Schweißanlage mit zwei Schweißstromkreisen zur Erläuterung der Funktionsweise des in Fig. 7 dargestellten erfindungsgemäßen Verfahrens zum Ermitteln einer störenden Kopplung zwischen den Schweißstromkreisen der Schweißanlage;

Fig. 9        eine weitere schematische Darstellung einer Schweißanlage mit zwei Schweißstromkreisen zur Erläuterung des in Fig. 7 dargestellten erfindungsgemäßen Verfahrens zum Ermitteln einer störenden Kopplung zwischen den Schweißstromkreisen der Schweißanlage;

Fig. 10        Signalverläufe zur Erläuterung einer möglichen Ausführungsform des in Fig. 7 dargestellten erfindungsgemäßen Verfahrens zum Ermitteln einer störenden Kopplung zwischen zwei Schweißstromkreisen einer Schweißanlage;

Fig. 11        weitere Signalverläufe zur Erläuterung der Funktionsweise bei einer möglichen Ausführungsform des in Fig. 7 dargestellten Verfahrens zur Ermittlung einer störenden Kopplung zwischen Schweißstromkreisen einer Schweißanlage;

Fig. 12      ein Ablaufdiagramm zur Darstellung eines möglichen Ausführungsbeispiels eines erfindungsgemäßen Verfahrens zum Kompensieren einer störenden Beeinflussung eines von einer Schweißstromquelle zum Schweißen eines Werkstückes bereitgestellten Schweißstromes durch eine zum Schweißen des gleichen Werkstückes eingesetzte andere Schweißstromquelle gemäß einem weiteren Aspekt der Erfindung;

Fig. 13      Signalverläufe zur Erläuterung der Funktionsweise eines Ausführungsbeispiels des in Fig. 12 dargestellten Kompensationsverfahrens;

Fig. 14      eine schematische Darstellung zur Erläuterung einer Koppelwirkung zwischen zwei Stromkreisen einer Schweißanlage;

Fig. 15      eine schematische Darstellung von Stromquellen ohne erfindungsgemäße Koppelkompensation;

Fig. 16      eine schematische Darstellung von Stromquellen mit erfindungsgemäßer Koppelkompensation gemäß dem in Fig. 12 dargestellten Kompensationsverfahren.

Das erfindungsgemäße Verfahren bzw. die erfindungsgemäße Vorrichtung dient dazu, eine gegenseitige Beeinflussung von gleichzeitig in einer Schweißanlage betriebenen Schweißstromquellen zu reduzieren bzw. zu beseitigen. Hierzu wird gemäß einem ersten Aspekt der Erfindung zunächst die bestehende störende Kopplung zwischen den Schweißstromkreisen der Schweißanlage ermittelt. Gemäß einem weiteren Aspekt der Erfindung wird die ermittelte Störung anschließend kompensiert.

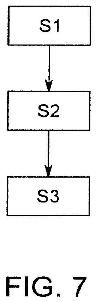

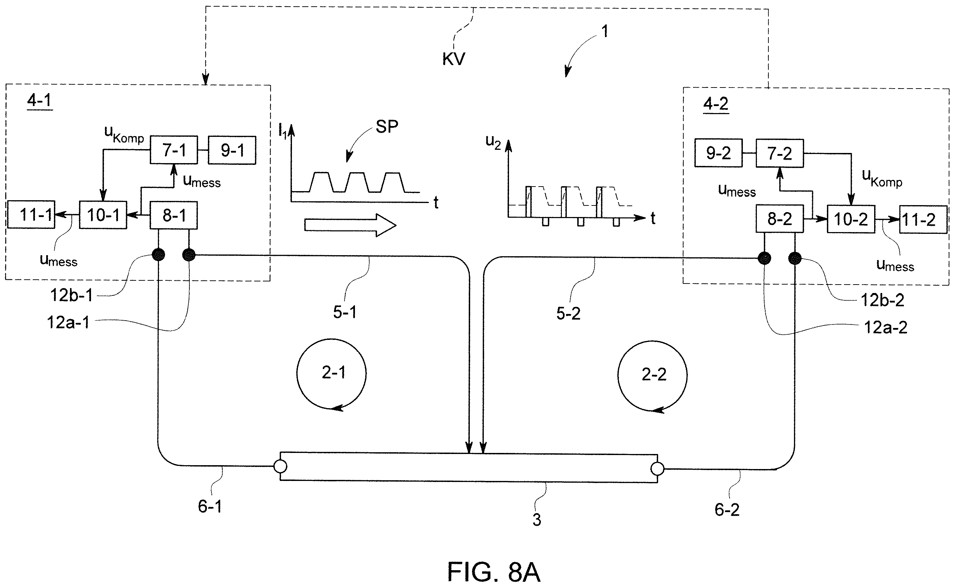

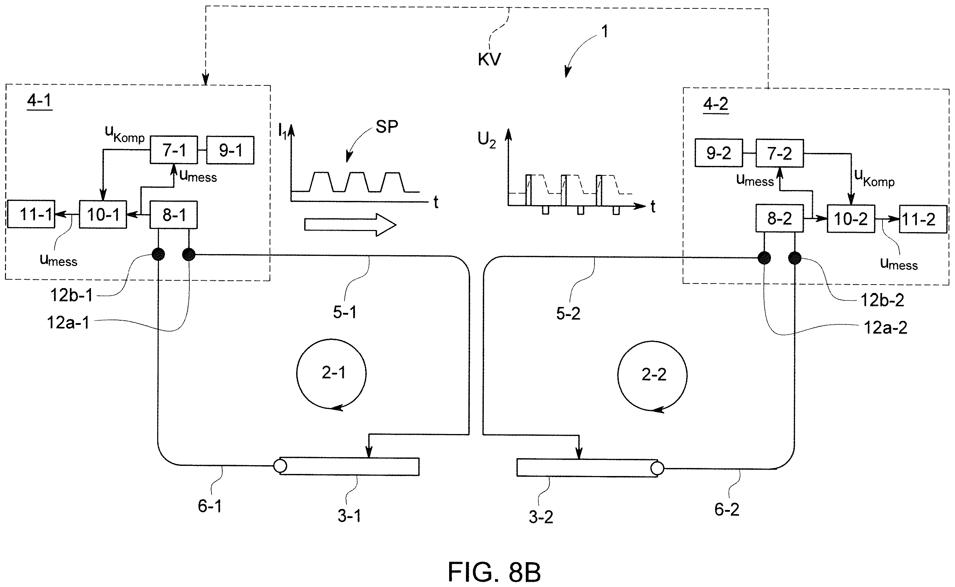

Fig. 7 zeigt ein Ablaufdiagramm zur Darstellung eines Ausführungsbeispiels eines Verfahrens zum Ermitteln einer störenden Kopplung zwischen Schweißstromkreisen 2-1, 2-2 einer Schweißanlage 1 gemäß einem ersten Aspekt der vorliegenden Erfindung. Eine derartige Schweißanlage 1 ist beispielhaft in Fig. 8 dargestellt.

Bei dem in Fig. 7 dargestellten Ausführungsbeispiel umfasst das erfindungsgemäße Verfahren zum Ermitteln einer störenden Kopplung zwischen Schweißstromkreisen 2-1, 2-2 einer Schweißanlage 1 im Wesentlichen drei Schritte.

In einem ersten Schritt S1 wird ein vorgegebenes Stromprofil SP in einem ersten Schweißstromkreis 2-1 (Senderschweißstromkreis) der Schweißanlage 1 angelegt.

In einem weiteren Schritt S2 wird ein hierdurch in einem zweiten Schweißstromkreis 2-2 (Empfängerschweißstromkreis) der Schweißanlage 1 eingekoppelter Spannungsverlauf U(t) und/oder ein eingekoppelter Stromverlauf I(t) erfasst.

Schließlich wird in einem Schritt S3 die störende Kopplung zwischen den Schweißstromkreisen 2-1, 2-2 d. h. zwischen den Sender- und Empfängerschweißstromkreisen auf Basis des Stromprofiles SP des in dem ersten Schweißstromkreis 2-1 (Senderschweißstromkreis) angelegten Stromes und des in dem zweiten Schweißstromkreis 2-2 (Empfängerschweißstromkreis) erfassten Spannungsverlaufes und/oder Stromverlaufes ermittelt.

Fig. 8 zeigt beispielhaft eine Schweißanlage 1 mit zwei Schweißstromkreisen 2-1, 2-2, die zum gleichzeitigen Schweißen eines Werkstückes 3 eingesetzt werden. Die beiden Schweißstromkreise 2-1, 2-2 enthalten jeweils eine Schweißstromquelle 4-1, 4-2, wie in Fig. 8 dargestellt. Ein Strom I kann jeweils über eine Zuführleitung 5-1, 5-2 dem Werkstück 3 zugeführt werden. Weiterhin wird der Strom I in jedem Schweißstromkreis 2-1, 2-2 jeweils über eine zugehörige Rückführ- bzw. Masseleitung 6-1, 6-2 an die Schweißstromquelle 4-1, 4-2 des jeweiligen Schweißstromkreises 2-1, 2-2 zurückgeführt, wie in Fig. 8 dargestellt. Die Zuführleitung 5-i und die Abführleitung 6-i eines Schweißstromkreises 2-i sind jeweils mit einem Pol 12a, 12b der Schweißstromquelle 4-i des Schweißstromkreises 2-i verbunden.

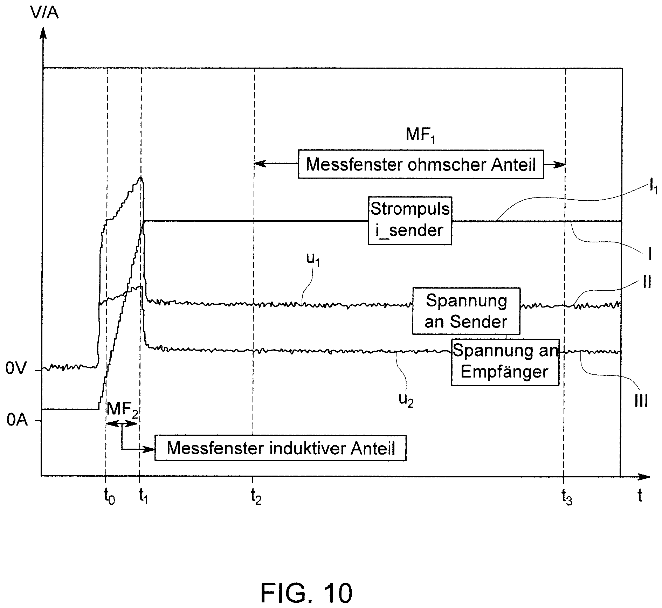

Die beiden Schweißstromkreise 2-1, 2-2 der Schweißanlage 1 werden vorzugsweise zur Ermittlung einer störenden Kopplung zwischen den Schweißstromkreisen geschlossen, wie in Fig. 8 dargestellt. Die in Fig. 8 dargestellte Schaltungsanordnung ist geeignet, eine störende Kopplung zwischen dem Schweißstromkreis 2-1 der Schweißanlage 1 und dem zweiten Schweißstromkreis 2-2 der Schweißanlage 1 zu ermitteln. Hierzu wird in einem ersten Schritt S1 zunächst ein vorgegebenes Stromprofil SP in einem der beiden Schweißstromkreise der Schweißanlage 1, beispielsweise in dem ersten Schweißstromkreis 2-1, angelegt, wie in Fig. 8 schematisch dargestellt. Das in dem ersten Schweißstromkreis 2-1 angelegte Stromprofil SP weist vorzugsweise einen oder mehrere Stromimpulse auf. In der Schweißstromquelle 4-2 des anderen Schweißstromkreises 2-2 wird ein induzierter Spannungsverlauf U erfasst und gespeichert, wie in Fig. 8 schematisch dargestellt. Der in dem zweiten Schweißstromkreis 2-2 der Schweißanlage 1 eingekoppelte Spannungsverlauf und/oder der dort eingekoppelte Stromverlauf wird somit im Schritt S2 erfasst und vorzugsweise gespeichert. Anschließend wird in der Schweißstromquelle 4-2 durch eine vorzugsweise integrierte Berechnungseinheit 7-2 die störende Kopplung zwischen den Schweißstromkreisen 2-1, 2-2 auf Basis des Stromprofiles SP des in dem ersten Schweißstromkreis 2-1 angelegten Stromes I und des in dem zweiten Schweißstromkreis 2-2 mittels einer Detektor- oder Messeinheit 8-2 erfassten Spannungsverlaufes U und/oder erfassten Stromverlaufes ermittelt bzw. berechnet. Es wird dabei ein Ohmscher Anteil an der Kopplung zwischen den Schweißstromkreisen 2-i und ein induktiver Anteil an der Kopplung zwischen den Schweißstromkreisen 2-i der Schweißanlage 1 ermittelt bzw. berechnet. Bei einer bevorzugten Ausführungsform wird der Ohmsche Anteil an der Kopplung zwischen den Schweißstromkreisen 2-i der Schweißanlage 1 in mindestens einem ersten Messfenster MF1 und der induktive Anteil an der Kopplung zwischen den Schweißstromkreisen 2-i der Schweißanlage 1 in mindestens einem zweiten Messfenster MF2 ermittelt. Das erste Messfenster MF1 zur Ermittlung des Ohmschen Anteils der Kopplung befindet sich in einer Phase des in dem ersten Schweißstromkreis 2-1 angelegten Stromprofiles SP, in welcher der Strompegel des angelegten Stromes I konstant ist, wie auch in Fig. 10 dargestellt. Das zweite Messfenster MF2 zur Ermittlung des induktiven Anteils an der Kopplung zwischen den Schweißstromkreisen 2-i befindet sich vorzugsweise in einer Phase des in dem ersten Schweißstromkreis 2-1 angelegten Stromprofiles SP, in welcher der Strompegel des angelegten Stromes während einer ansteigenden Flanke eines Stromimpulses ansteigt oder während einer abfallenden Flanke eines Stromimpulses abfällt.

Fig. 10 zeigt ein Messfenster MF2 zur Ermittlung des induktiven Anteils an der Kopplung während einer ansteigenden Flanke eines Stromimpulses. Der induktive Anteil der gemessenen Spannung $U_2$ wird vorzugsweise berechnet, indem man die Spannungszeitfläche auf Seiten der Empfänger-Schweißstromquelle 4-2 während einer Stromänderung an der Sender-Schweißstromquelle 4-1 ermittelt und davon den Ohmschen Spannungsanteil abzieht. Vorzugsweise wird ein Spannungsmittelwert des induktiven Anteils an der Kopplung und des Ohmschen Anteils an der Kopplung getrennt voneinander berechnet und bewertet. Vorzugsweise werden Koppelfaktoren $K_R$, $K_L$ berechnet, welchen den Ohmschen Anteil an der Kopplung und den induktiven Anteil an der Kopplung zwischen den Schweißstromkreisen 2-1, 2-2 der Schweißanlage 1 angeben. Der berechnete Ohmsche Koppelfaktor $K_R$, welcher den Ohmschen Anteil an der Kopplung zwischen den Schweißstromkreisen 2-i angibt, und der berechnete induktive Koppelfaktor $K_L$, welcher den induktiven Anteil an der Kopplung zwischen den Schweißstromkreisen 2-i angibt, wird bei einer möglichen Ausführungsform in Datenspeichern 9-1, 9-2 der Schweißstromquellen 4-1, 4-2 der Schweißanlage 1 gespeichert. Bei einer möglichen Ausführungsform wird der berechnete Ohmsche Koppelfaktor $K_R$ und der berechnete induktive Koppelfaktor $K_L$ über eine Nutzerschnittstelle an einen Nutzer der Schweißanlage 1 ausgegeben.

Der Ohmsche Anteil an der Kopplung, welcher sich in dem Ohmschen Koppelfaktor $K_R$ widerspiegelt, zeigt an, ob es Leitungsanteile in den beiden Schweißstromkreisen 2-1, 2-2 gibt, die vom elektrischen Strom beider Stromquellen 4-1, 4-2 durchflossen werden. Der Ohmsche Anteil $R_{Koppel}$ an der Kopplung wird vorzugsweise in Milliohm angegeben.

$$R_{Koppel} = U_{Empfänger} / I_{Sender,}$$

wobei $R_{Koppel}$ der Widerstand der gemeinsamen Leitungsanteile der beiden Schweißstromkreise 2-1, 2-2 ist, $U_{Empfänger}$ die empfangsseitig durch die Empfänger-Schweißstromquelle 4-2 erfasste Spannung $U_2$ und $I_{Sender}$ der in dem Sender-Schweißstromkreis 2-1 angelegte Strom $I_1$ ist.

Gemeinsame Leitungsanteile an den beiden Schweißstromkreisen 2-1, 2-2 sind zu vermeiden, d. h. es ist angestrebt, den Ohmschen Anteil an der Kopplung möglichst gering zu halten.

Der induktive Anteil an der Kopplung zwischen den beiden Schweißstromkreisen 2-1, 2-2 spiegelt die räumliche Anordnung der beiden Schweißstromkreise relativ zueinander wider, insbesondere den Abstand zwischen den beiden Schweißstromkreisen, und wird in Millihenry angegeben.

$$L_{kopp} = U_{empf\_ind} / (di/dt_{Sender}),$$

wobei $L_{kopp}$ die Koppelinduktivität darstellt, $U_{empf\_ind}$ die auf Seiten des Empfänger-Schweißstromkreises 2-2 induzierte Spannung $U_2$ ist und $di/dt_{Sender}$ die auf Seiten des Sender-Schweißstromkreises 2-1 vorgenommene Stromänderung des Stromes $I_1$ widergibt.

Die ermittelten Werte der Koppelmessung, d. h. der induktive und der Ohmsche Anteil an der Kopplung zwischen den Schweißstromkreisen 2-i werden vorzugsweise durch eine Berechnungseinheit 7-i berechnet und bei einer möglichen Ausführungsform über eine Nutzerschnittstelle an einen Nutzer der Schweißanlage 1 ausgegeben. Bei einer möglichen Ausführungsform wird die berechnete Koppelinduktivität $L_{Koppel}$ zu der Induktivität $L_1$ des Sender-Schweißstromkreises 2-1 in Beziehung gesetzt und kann beispielsweise dem Nutzer als Prozentwert angezeigt werden. Dies bietet den Vorteil, dass die Anzeige über die Nutzerschnittstelle leichter verständlich ist, da die Einheit Millihenry für Anwender relativ schwer verständlich ist und zudem leicht mit der normalen Schweißkreisinduktivität des Schweißkreises verwechselt werden kann. Eine in Prozent angegebene relative Koppelinduktivität ($I_{Koppel} = L_{Koppel}/L$) ist intuitiv leichter verständlich, wobei der ideale Wert für die relative Koppelinduktivität $I_{Koppel}$ bei 0 % liegt, d. h. keine Kopplung zwischen den Schweißstromkreisen 2-i.

Bei einer möglichen Ausführungsform kann auch der Ohmsche Anteil an der Kopplung $R_{Koppel}$ in Bezug zum Sender-Schweißstromkreis 2-1 gesetzt werden ($r_{Koppel} = R_{Koppel}/R$). Ein Wert von $r_{Koppel} > 0 \%$ für den relativen Ohmschen Anteil $r_{Koppel}$ gibt an, dass es einen gemeinsamen Leitungsabschnitt zwischen den beiden Schweißstromkreisen 2-1, 2-2 gibt, der von beiden Strömen I1, I2 durchflossen wird. Dies ist zu vermeiden. Daher ist ein Wert von 0 % für den relativen Ohmschen Anteil an der Kopplung $r_{Koppel}$ anzustreben.

Bei einer möglichen Ausführungsform der Schweißanlage 1 besteht eine drahtlose oder drahtgebundene Kommunikationsverbindung KV zwischen der Schweißstromquelle 4-1 des ersten Schweißstromkreises 2-1 und der Schweißstromquelle 4-2 des zweiten Schweißstromkreises 2-2. Bei dieser Ausführungsform wird das im ersten Schweißstromkreis 2-1 durch die erste Schweißstromquelle 4-1 der Schweißanlage 1 angelegte vorgegebene Stromprofil SP an die Schweißstromquelle 4-2 über die Kommunikationsverbindung KV übertragen. In dem zweiten Schweißstromkreis 2-2 wird ein hierdurch verursachter eingekoppelter Spannungsverlauf und/oder verursachter Stromverlauf erfasst. In einem weiteren Schritt kann dann die störende Kopplung zwischen den beiden Schweißstromkreisen 2-1, 2-2 auf Basis des über die Kommunikationsverbindung KV übermittelten bzw. übertragenen Stromprofiles SP des in dem ersten Schweißstromkreis 2-1 angelegten Stromes I und des in dem zweiten Schweißstromkreis 2-2 erfassten Spannungs- und/oder Stromverlaufes durch eine Berechnungseinheit 7 ermittelt bzw. berechnet werden.

Bei einer alternativen Ausführungsform besteht keine Kommunikationsverbindung KV und es erfolgt kein Datenaustausch zwischen den beiden Schweißstromquellen 4-1, 4-2 der beiden Schweißstromkreise 2-1, 2-2 der Schweißanlage 1. Die Berechnung der Koppelfaktoren KF bzw. die Ermittlung der störenden Kopplung zwischen den Schweißstromkreisen 2-i kann auch ohne eine Datenverbindung zwischen den beiden Schweißstromquellen 4-1, 4-2 erfolgen. Bei dieser Ausführungsform sind die benötigten Daten bereits in einem Datenspeicher 9-2 der Empfänger-Schweißstromquelle 4-2 abgelegt bzw. gespeichert. Das in der Sender-Schweißstromquelle 4-1 in einem Datenspeicher 9-1 gespeicherte Stromprofil SP (di/dt/Strompegel und Zeitwerte) ist bei dieser Ausführungsvariante auch in dem Datenspeicher 9-2 der Empfänger-Schweißstromquelle 4-2 gespeichert. Hierdurch ist es möglich, dass die in der Empfänger-Schweißstromquelle 4-2 vorhandene Berechnungseinheit 7-2 die Berechnung des induktiven Koppelfaktors $K_L$ und des Ohmschen Koppelfaktors $K_R$ vornehmen kann, ohne dass Daten zwischen den beiden Schweißstromquellen 4-1, 4-2 über eine Kommunikationsverbindung KV ausgetauscht werden müssen. Bei dieser Ausführungsform ist das in dem ersten Schweißstromkreis 2-1 angelegte Stromprofil SP in dem Datenspeicher 9-2 des zweiten Schweißstromkreises 2-2 ebenfalls abgespeichert und kann zur Berechnung einer entsprechenden Kompensationsspannung $U_{Komp}$ herangezogen werden.

Ein Zeitpunkt des Startens des angelegten Stromprofiles SP kann bei einer möglichen Ausführungsform durch die Spannungsänderung auf Seiten der Empfänger-Schweißstromquelle 4-2 anhand des durch deren Messeinheit 8-2 gemessenen Messsignals erkannt werden, sodass die verschiedenen Phasen bzw. Messfenster MF synchronisiert werden können. Dies ist möglich, da auf Seiten der Empfänger-Schweißstromquelle 4-2 das Zeitprofil bzw. Stromprofil SP der Sender-Schweißstromquelle 4-1 in dem Datenspeicher 9-2 gespeichert bzw. hinterlegt ist.

Bei einer möglichen Ausführungsform kann eine erste Anzahl von Sender Sync-zyklen gestartet werden, die einen relativ steilen Stromanstieg (di/dt) aufweisen, um den Empfänger bzw. Detektor 8-2 der Empfangs-Schweißstromquelle 4-2 selbst bei schwacher Kopplung zwischen den Schweißstromkreisen 2-i zu synchronisieren. In einem darauffolgenden Zeitfenster kann dann der eigentliche Messprofilablauf gestartet werden.

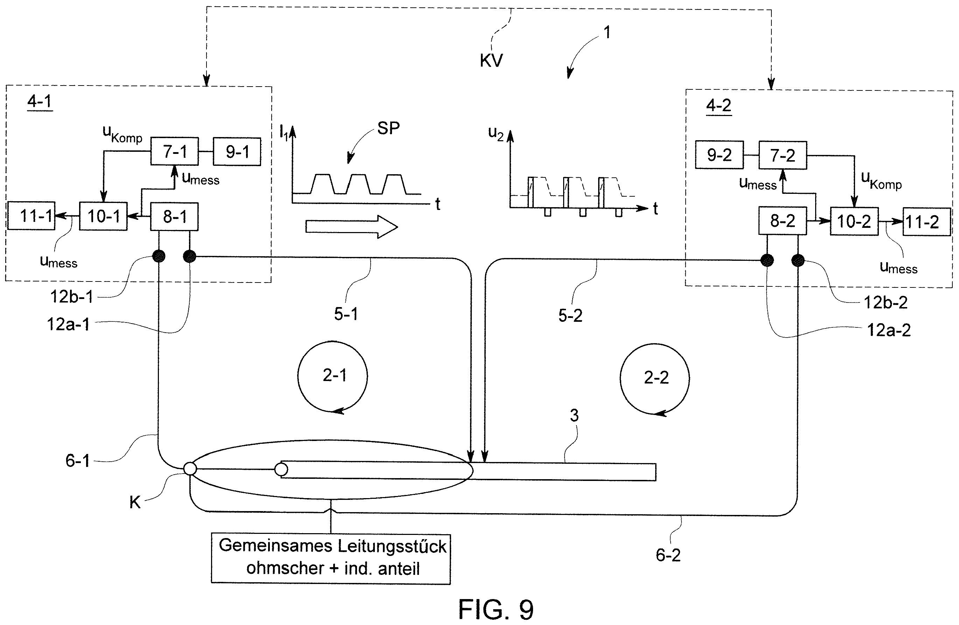

Bei dem in Fig. 8A dargestellten Ausführungsbeispiel der Schweißanlage 1 sind beide Schweißstromkreise 2-1, 2-2 über das Werkstück 3 kurzgeschlossen, wobei sie kein gemeinsames Leitungsstück, insbesondere über das Werkstück 3, besitzen. Bei dem in Fig. 8B dargestellten Ausführungsbeispiel der Schweißanlage 1 sind zwei Schweißstromkreise 2-1, 2-2 zum Schweißen zweier unterschiedlicher Werkstücke 3-1, 3-2 vorgesehen. Die beiden Schweißstromkreise 2-1, 2-2 bei dem in Fig. 9 dargestellten Ausführungsbeispiel haben ein gemeinsames Leitungsstück, da die Masse- bzw. Rückleitung 6-2 des zweiten Schweißstromkreises 2-2 an einem Knoten K der Masse- bzw. Rückleitung 6-1 des ersten Schweißstromkreises 2-1 abgezweigt wird. Das in Fig. 9 dargestellte gemeinsame Leitungsstück umfasst somit Anteile der Masseleitung 6-1 des ersten Schweißstromkreises 2-1 sowie eine Leitungsverbindung über das Werkstück 3. Der Ohmsche Anteil der gemessenen Kopplung $R_{Koppel}$, welcher sich in dem Ohmschen Koppelfaktor $K_R$ widerspiegelt, zeigt das Vorhandensein einer derartigen gemeinsamen Leitung an.

Die berechneten Koppelfaktoren $K_L$, $K_R$ können gespeichert werden und bei einer möglichen Ausführungsform zur Bestimmung einer Kompensationsspannung $U_{Komp}$ auf Basis des Stromprofiles SP des an den ersten Schweißstromkreis 2-1 angelegten Stromes $I_1$ herangezogen werden. Bei einer möglichen Ausführungsform wird diese ermittelte Kompensationsspannung $U_{Komp}$ von einer Messspannung $U_{Mess}$ während des Schweißbetriebes subtrahiert, die vorzugsweise durch eine Spannungsmesseinheit 8-1 einer Schweißstromquelle 4-1, welche sich in dem ersten Schweißstromkreis 2-1 befindet, gemessen wird, um eine bereinigte Messspannung $U'_{Mess}$ zu ermitteln, welche zur Regelung eines von der Schweißstromquelle 4-1 während des Schweißbetriebes erzeugten Schweißstromes $I_S$ verwendet werden kann.

Fig. 10 zeigt beispielhaft Signalverläufe für einen Messzyklus bei der erfindungsgemäßen Schweißanlage 1. Bei dem dargestellten Beispiel werden mehrere, beispielsweise 20, solcher Messzyklen in einem zeitlichen Abstand von beispielsweise 30 ms von der Sender-Schweißstromquelle 4-1 ausgegeben und die einzelnen Zyklusmesswerte t0 bis t1 (MF2) und t2 bis t3 (MF1) werden gemittelt.

In Fig. 10 zeigt eine erste Kurve I den Stromverlauf $I_1$ in dem Sender-Schweißstromkreis 2-1. Eine weitere Kurve II zeigt den Spannungsverlauf $U_1$ in dem Sender-Schweißstromkreis 2-1. Eine weitere Kurve III zeigt den Spannungsverlauf $U_2$ in dem Empfänger-Schweißstromkreis 2-2. Wie man in Fig. 10 erkennen kann, ist zwischen den Zeitpunkten t2 und t3 der Strompegel des durch die Schweißstromquelle 4-1 des ersten Schweißstromkreises 2-1 angelegten Stromprofiles SP konstant und bildet ein Messfenster $MF_1$ zur Ermittlung des Ohmschen Anteils an der störenden Kopplung zwischen den beiden Schweißstromkreisen. Der Ohmsche Anteil an der Kopplung zwischen den beiden Schweißstromkreisen 2-1, 2-2 der Schweißanlage 1 kann in dem ersten Messfenster MF1 ermittelt werden. Dieses erste Messfenster MF1 befindet sich in einer Phase des in dem ersten Schweißstromkreis 2-1 angelegten Stromprofiles SP, in welcher der Strompegel des angelegten Stromes $I_1$ konstant ist.

Demgegenüber wird zwischen den Zeitpunkten t0 bis t1 (MF1) der induktive Anteil an der Kopplung zwischen den Schweißstromkreisen 2-i der Schweißanlage 1 ermittelt. Dieser Zeitraum zwischen t0 und t1 bildet ein zweites Messfenster MF2, in welchem der Strompegel SP des angelegten Stromes $I_1$ während einer ansteigenden Flanke des Stromimpulses relativ stark ansteigt, wie in Fig. 10 dargestellt. Der induktive Anteil an der Kopplung zwischen den Schweißstromkreisen 2-i der Schweißanlage 1 wird in dem zweiten Messfenster MF2 auf Grundlage des in dem ersten Schweißstromkreis 2-1 angelegten Stromprofiles SP und des in dem zweiten Schweißstromkreis 2-2 erfassten Spannungsverlaufes und/oder Stromverlaufes ermittelt. Das zweite Messfenster MF2 befindet sich in einer Phase des in dem ersten Schweißstromkreis 2-1 angelegten Stromprofiles SP, in welcher der Strompegel des angelegten Stromes $I_1$ während der ansteigenden Flanke des Stromimpulses ansteigt. Alternativ kann sich das zweite Messfenster MF2 auch in einer Phase des in dem ersten Schweißstromkreis 2-1 angelegten Stromprofiles SP befinden, in welcher der Strompegel des angelegten Stromes $I_1$ während einer abfallenden Flanke des Stromimpulses abfällt. Wie man aus Fig. 10 erkennen kann, erfolgt die Ermittlung bzw. Messung des Ohmschen Anteils der Kopplung in einem anderen Messfenster MF als die Ermittlung des induktiven Anteils der Kopplung.

Bei einer möglichen Ausführungsform kann ein Ohmscher Spannungsanteil zyklisch aus dem aktuell in dem ersten Schweißstromkreis 2-1 fließenden Senderstrom $I_1$ in dem ersten Messfenster ($MF1_n$) und einem in einem vorhergehenden Zyklus in einer Phase zwischen t2 und t3 ($MF1_{n-1}$) ermittelten Widerstand berechnet und von den Messwerten subtrahiert werden. Beispielsweise werden alle 25 $\mu$s ein Messwert gespeichert und von diesem der Ohmsche Spannungsanteil abgezogen. Die einzelnen Messungen abzüglich des Ohmschen Anteils können während der Phase t0 bis t1 (zweites Messfenster MF2) aufaddiert werden. Daraus kann am Ende von t1 ein arithmetischer Mittelwert berechnet werden. Aus einem arithmetischen Mittelwert einer Phase kann wiederum der Mittelwert über mehrere Zyklen, beispielsweise 20 Zyklen, berechnet werden.

Aus diesem berechneten Spannungsmittelwert $U_{empf\_ind}$ und der Stromänderung di/dt des Sender-Stromverlaufes kann bei einer möglichen Ausführungsform die Koppelinduktivität $K_L$ entsprechend folgender Formel berechnet werden:

$$L_{kopp} = U_{empf\_ind} / (di/dt \text{ Sender})$$

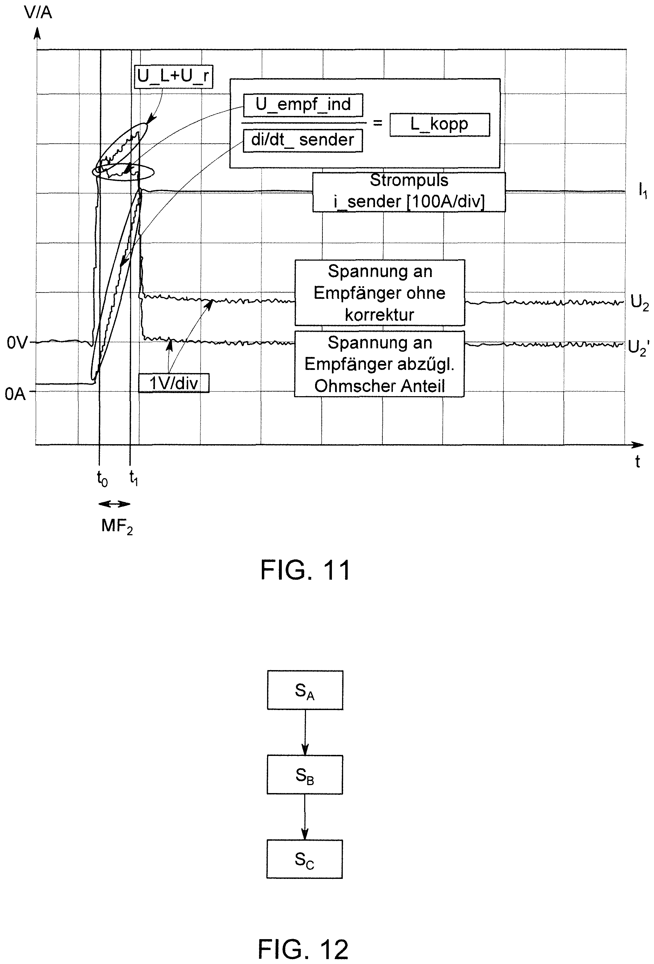

Fig. 11 zeigt beispielhaft einen solchen Messzyklus.

Bei einer möglichen Ausführungsform erfolgt vor der eigentlichen Koppelfaktormessung nach der Aktivierung der Schweißanlage 1 durch einen Anwender durch Einstellen der Sender-Schweißstromquelle 4-1 ein Synchronisierungsablauf. Beispielsweise kann ein derartiger Synchronisierungsablauf durch Drücken einer Taste an der vorher definierten Sender-Schweißstromquelle 4-1 gestartet werden.

Die Sender-Schweißstromquelle 4-1 speist daraufhin einen steilen Stromimpuls (Sender-Start-Impuls) mit einer Anstiegsrampe von beispielsweise 1000 A/ms und einem Zielstrom von 500 A in den kurzgeschlossenen Sender-Schweißstromkreis 2-1 ein.

Durch die magnetische Kopplung wird in dem ebenfalls kurzgeschlossenen Empfänger-Schweißstromkreis 2-2 eine elektrische Spannung $U_2$ induziert, deren Höhe von der Leitungsverlegung der beiden Schweißstromkreise 2-1, 2-2 abhängt und die an den Ausgangsanschlüssen der Empfänger-Schweißstromquelle 4-2 durch deren Messeinheit 8-2 gemessen wird. Die Detektion des Sender-Start-Impulses an der Empfänger-Schweißstromquelle 4-2 kann bei einer möglichen Ausführungsform durch eine Auswertung des absoluten Spannungswertes bzw. Spannungsverlaufs erfolgen oder alternativ durch eine Auswertung einer Änderungsgeschwindigkeit bei einem vorgegebenen Zeitintervall, d. h. differentiell.

Falls eine Spannung $U_2$ einen an der Empfänger-Schweißstromquelle 4-2 voreingestellten Wert von beispielsweise 0,5 V übersteigt, kann bei einer möglichen Ausführungsform ein Mess-Zeitablaufschema gestartet werden, welches identisch zu dem in der Sender-Schweißstromquelle 4-1 ist.

Eine Detektion des Sender-Schweißstromanstieges am Empfänger kann auch durch eine Erfassung der Spannungsänderung du/dt der auf die Empfänger-Schweißstromquelle 4-2 eingekoppelten Spannung U erfolgen. Dazu kann beispielsweise in einem Zeitabstand von 25 $\mu$s die Spannungsdifferenz aus dem laufend erfassten Spannungssignal berechnet werden. Überschreitet beispielsweise diese Spannungsdifferenz einen Wert von beispielsweise 0,2 V, kann ein Mess-Zeitablaufschema gestartet werden, welches identisch zu dem in der Sender-Schweißstromquelle 4-1 ist.

Bei einer weiteren möglichen Ausführungsform ist auch eine Kombination beider Auswerteverfahren möglich, d. h. eine Kombination aus absoluter Auswertung und differentieller Auswertung.

Die in den Figuren 8A, 8B, 9 dargestellte Schweißanlage 1 verfügt somit über eine Kopplungs-Ermittlungseinheit, welche eine störende Kopplung zwischen den Schweißstromkreisen 2-1, 2-2 der Schweißanlage 1 ermittelt. Bei einer möglichen Ausführungsform verfügen eine oder beide Schweißstromquellen 4-i der Schweißanlage 1 über eine derartige Kopplungs-Ermittlungseinheit bzw. Berechnungseinheit 7-i. Bei einer alternativen Ausführungsform kann eine Kopplungs-Ermittlungseinheit der Schweißanlage 1 durch eine separate Einheit gebildet werden, die vorzugsweise über eine drahtlose oder drahtgebundene Kommunikationsverbindung KV mit den verschiedenen Schweißstromquellen 2-i der Schweißanlage 1 verbunden ist und mit diesen kommuniziert. Die Kopplungs-Ermittlungseinheit ist dazu ausgelegt, das in Fig. 7 dargestellte Ermittlungsverfahren auszuführen.

Nachdem die Koppelfaktoren $K_L$, $K_R$ mithilfe des in Fig. 7 dargestellten Verfahrens ermittelt worden sind, erfolgt vorzugsweise eine automatische Kompensation dieser ermittelten störenden Beeinflussung entsprechend einem Kompensationsverfahren gemäß einem weiteren Aspekt der Erfindung. Fig. 12 zeigt ein Ablaufdiagramm eines möglichen Ausführungsbeispiels eines derartigen Kompensationsverfahrens zum Kompensieren einer störenden Beeinflussung eines von einer Schweißstromquelle 4 zum Schweißen eines Werkstückes 3 bereitgestellten Schweißstromes $I_S$ durch eine zum Schweißen des gleichen Werkstückes 3 eingesetzte andere Schweißstromquelle 4'.

Bei der in Fig. 12 dargestellten Ausführungsform umfasst das erfindungsgemäße Kompensationsverfahren drei Hauptschritte.

In einem ersten Schritt $S_A$ wird eine Kompensationsspannung $U_{Komp}$ durch eine Berechnungseinheit 7-2 einer (Empfänger-)Schweißstromquelle 4-2 auf Basis eines von der jeweils anderen Schweißstromquelle 4-1 bereitgestellten Schweißstromverlaufes der anderen Schweißstromquelle 4-1 berechnet. Diese Kompensationsspannung $U_{Komp}$ kann durch die Berechnungseinheit 7-2 der Schweißstromquelle 4-2 auf Basis eines Stromprofiles SP des von der jeweils anderen Schweißstromquelle 4-1 bereitgestellten Stromverlaufes $I_1$ und auf Basis gespeicherter Koppelfaktoren KF berechnet werden. Alternativ liegt dieses Stromprofil SP bereits in einem lokalen Datenspeicher 9-2 der Schweißstromquelle 4-2 vor. Die Koppelfaktoren KF umfassen einen Ohmschen Koppelfaktor $K_R$ und mindestens einen induktiven Koppelfaktor $K_L$ und sind beispielsweise in dem Datenspeicher 9-2 der Schweißstromquelle 4-2 gespeichert. Alternativ kann die Berechnung der Kompensationsspannung $U_{Komp}$ auch durch eine Berechnungseinheit 7-1 der anderen (Sender-)Schweißstromquelle 4-1 erfolgen und die berechnete Kompensationsspannung $U_{Komp}$ wird dann über eine Kommunikationsverbindung KV an die (Empfänger-)Schweißstromquelle 4-2 übertragen.

In einem weiteren Schritt $S_B$ wird die im Schritt $S_A$ durch eine Berechnungseinheit berechnete Kompensationsspannung $U_{Komp}$ von einer durch eine Spannungsmesseinheit 8-2 der Schweißstromquelle 4-2 gemessenen Messspannung $U_{Mess}$ zur Ermittlung einer bereinigten Messspannung $U'_{Mess}$ subtrahiert. Bei einer möglichen Ausführungsform wird die von der Berechnungseinheit 7-2 der Schweißstromquelle 4-2 berechnete Kompensationsspannung $U_{Komp}$ oder die über eine Kommunikationsverbindung übertragene Kompensationsspannung $U_{Komp}$ durch eine Kompensationseinheit 10-2 der (Empfänger-)Schweißstromquelle 4-2 laufend von der durch die Spannungsmesseinheit 8-2 der (Empfänger-)Schweißstromquelle 4-2 gemessenen Messspannung $U_{Mess}$ zur Ermittlung der bereinigten Messspannung $U'_{Mess}$ subtrahiert.

In einem weiteren Schritt $S_C$ wird der von der Schweißstromquelle 4-2 erzeugte Schweißstrom $I_S$ in Abhängigkeit von der bereinigten Messspannung $U'_{Mess}$ geregelt. Bei einer möglichen Ausführungsform kann der mittels der bereinigten Messspannung $U'_{Mess}$ geregelte Schweißstrom $I_S$ über eine Schweißstromleitung 5-2 der Schweißstromquelle 4-2 einem Schweißbrenner 13-2 zum Schweißen des Werkstückes 3 zugeleitet werden. Bei einer möglichen Ausführungsform des erfindungsgemäßen Kompensationsverfahrens wird das Stromprofil SP des Schweißstromverlaufes $I_S$ der anderen Schweißstromquelle 4-1 aus dem Datenspeicher 9-2 der Schweißstromquelle 4-2 ausgelesen. Bei einer Ausführungsform des erfindungsgemäßen Kompensationsverfahrens wird das Stromprofil SP des Schweißstromverlaufes $I_S$ der anderen Schweißstromquelle 4-1 von der anderen Schweißstromquelle 4-1 drahtlos oder drahtgebunden über eine Kommunikationsverbindung KV an die Berechnungseinheit 7-2 der Schweißstromquelle 4-2 übertragen, welche die Kompensationsspannung $U_{Komp}$ auf Grundlage des übertragenen Schweißstromverlaufes und auf Basis gespeicherter Koppelfaktoren KF berechnet. Beim laufenden Schweißprozess gibt es auch dynamisch, je nach Prozesszustand (Kurzschluss), generierte Stromverläufe, welche nicht zyklisch sondern ereignisbedingt ablaufen. Daher wird bei der Kompensation, welche während des laufenden Schweißprozesses erfolgt, das Senderstromprofil direkt zum Empfänger übertragen, um eine korrekte Kompensation der Koppelspannung zu erreichen. Das Stromprofil SP des Schweißstromverlaufes $I_S$ der anderen Schweißstromquelle 4-1 umfasst vorzugsweise Strompegelwerte sowie Strompegeländerungen mit zugehörigen Zeitwerten. Die von der Berechnungseinheit 7-2 der Schweißstromquelle 4-2 berechnete Kompensationsspannung $U_{Komp}$ kann anschließend durch die Kompensationseinheit 10-2 der Schweißstromquelle 4-2 laufend von der durch die Spannungsmesseinheit 8-2 der Schweißstromquelle 4-2 gemessenen Messspannung $U_{Mess}$ zur Ermittlung einer bereinigten Messspannung $U'_{Mess}$ subtrahiert werden. Diese bereinigte Messspannung $U'_{Mess}$ dient dann zur Regelung des über die Schweißstromleitung der Schweißstromquelle 4-2 an den zugehörigen Schweißbrenner SB geleiteten Schweißstromes $I_S$. Das erfindungsgemäße Kompensationsverfahren gemäß Fig. 12 ermöglicht es somit, eine ungewollte eingekoppelte Spannung aus dem Messsignal herauszurechnen. Hierdurch kann die gegenseitige Beeinflussung der Schweißstromkreise 2-i reduziert bzw. aufgehoben werden.

Das erfindungsgemäße Kompensationsverfahren gemäß Fig. 12 greift dabei auf zuvor ermittelte und gespeicherte Koppelfaktoren KF, insbesondere mindestens einen Ohmschen Koppelfaktor $K_R$ und eine oder mehrere induktive Koppelfaktoren $K_L$ zu. Bei dem erfindungsgemäßen Kompensationsverfahren wird vorzugsweise das Stromprofil SP, d. h. der aktuelle Stromverlauf, sowie eine Stromänderungsrate (di/dt) des von der anderen Sender-Schweißstromquelle 4-1 abgegebenen Stromes I zu der Empfänger-Schweißstromquelle 4-2 kontinuierlich bzw. permanent über eine Kommunikationsverbindung KV übertragen.

Aus den Stromprofildaten, d. h. aus dem Absolutstromwert in Ampere sowie aus der Stromänderungsrate di/dt (A/ms) kann unter Verwendung der zuvor ermittelten Koppelinduktivität L (mH) und dem Ohmschen Koppelfaktor R (mOhm) entsprechend der folgenden Formel eine Koppelspannung berechnet werden:

$$U_{kopp} = L_{kopp} \times di/dt + R_{Leitung} \times Senderstrom$$

Diese Koppelspannung folgt dem zeitlichen Verlauf des Stromprofils SP der eingekoppelten Sender-Stromquelle 4-1 und kann als Kompensationsspannung $U_{Komp}$ laufend von der an Ausgangsbuchsen der Empfänger-Schweißstromquelle 4-2 durch deren Messeinheit 8-2 gemessenen Spannung $U_{Mess}$ vorzeichenbehaftet subtrahiert werden. Diese, um den eingekoppelten Spannungsanteil bereinigte Messspannung $U'_{Mess}$ wird anschließend für die Prozessregelung 11-2 der Empfänger-Schweißstromquelle 4-2 verwendet. Hierdurch wird die gegenseitige Beeinflussung der Schweißstromkreise 2-1, 2-2 reduziert bzw. vollständig aufgehoben.

Das Berechnen der Kompensationsspannung $U_{Komp}$ sowie das Ermitteln der bereinigten Messspannung $U'_{Mess}$ erfolgt bei einer bevorzugten Ausführungsform digital. Bei einer alternativen Ausführungsform erfolgt die Berechnung der Kompensationsspannung $U_{Komp}$ und das Ermitteln der bereinigten Messspannung $U'_{Mess}$ analog.

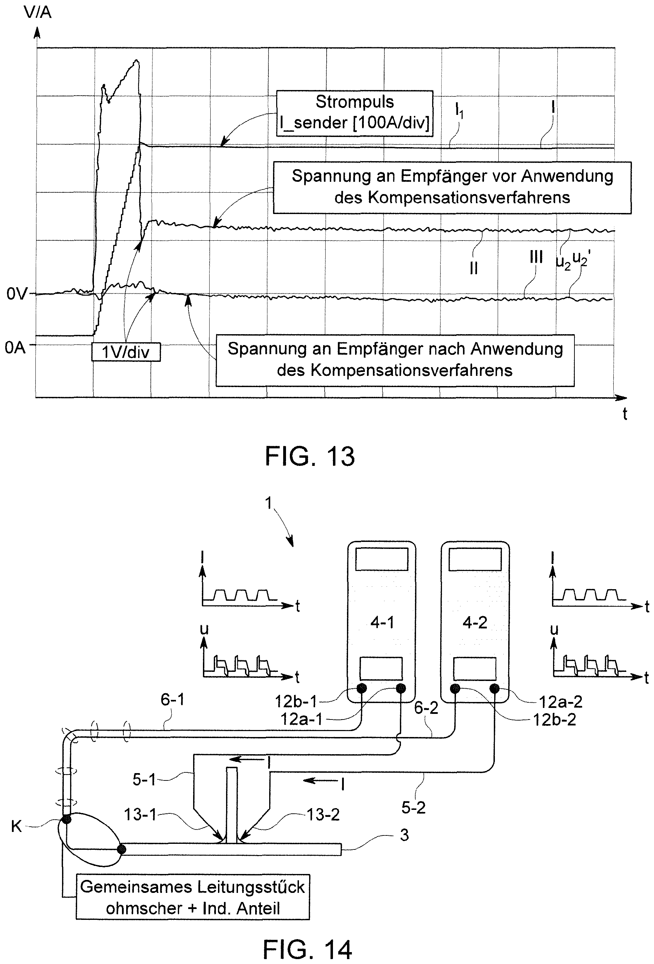

Fig. 13 zeigt ein Signaldiagramm mit Spannungsverläufen an der Empfänger-Schweißstromquelle 4-2 vor und nach Anwendung des in Fig. 7 dargestellten erfindungsgemäßen Kompensationsverfahrens.

Die Kurve I in Fig. 13 zeigt den Stromverlauf auf Seiten der Sender-Schweißstromquelle 4-1.

Die Kurve II zeigt den Spannungsverlauf an der Empfänger-Schweißstromquelle 4-2 vor Anwendung des erfindungsgemäßen Kompensationsverfahrens.

Die Kurve III in Fig. 13 zeigt den Spannungsverlauf an der Empfänger-Schweißstromquelle 4-2 nach Anwendung des erfindungsgemäßen Kompensationsverfahrens.

Das erfindungsgemäße Verfahren zum Kompensieren einer störenden Beeinflussung zwischen mindestens zwei Schweißstromkreisen 2-1, 2-2 eignet sich nicht nur zur Erfassung und Kompensation bei Schweißstromkreisen mit konstanter Schweißkreisinduktivität L bzw. Koppelfaktor, sondern auch bei Schweißstromkreisen mit sich zeitlich veränderten Schweißkreisinduktivitäten L(t). Die Schweißkreisinduktivität L des Schweißstromkreises 2-i kann sich mit der Amplitude des Stromes ändern. Dies ist beispielsweise der Fall, wenn sich ferromagnetische Stoffe in dem Schweißstromkreis 2-i befinden.

Bei einer möglichen Ausführungsform des erfindungsgemäßen Verfahrens erfolgt die Erfassung des induktiven Anteils an der Kopplung zwischen den Schweißstromkreisen 2-i der Schweißanlage 1 innerhalb eines Messfensters MF, das in kleinere Zeitabschnitte unterteilt wird, wobei für jeden Zeitabschnitt zu den entsprechenden Stromwerten die einzelnen verschiedenen Induktionswerte $L_i$ ermittelt und gespeichert werden. Für das erfindungsgemäße Kompensationsverfahren werden dann jeweils die einzelnen gespeicherten Induktionswerte $L_i$ bei den jeweiligen Stromwerten $I_i$ des aktuellen Stromes des Sender-Schweißstromkreises 2-1 aus dem lokalen Datenspeicher abgerufen und für die Berechnung der Koppelspannung bzw. Kompensationsspannung $U_{Komp}$ verwendet.

Fig. 14 zeigt ein praktisches Ausführungsbeispiel für die Koppelwirkung von zwei Schweißstromkreisen 2-1, 2-2 aufeinander. Die bei der Schweißanlage 1 gemäß Fig. 14 an dem Knoten K verzweigten Masseleitungen 6-1, 6-2 der beiden Schweißstromkreise 2-1, 2-2 sind bei dem dargestellten Ausführungsbeispiel weitgehend zueinander parallel verlegt, sodass sie bei einem Stromfluss durch die Masseleitungen 6-1, 6-2 eine magnetische Kopplung hervorrufen. Die parallelen Masseleitungen 6-1, 6-2 sind für die induktive (magnetische) Kopplung verantwortlich. Die Zuführleitungen 5-1, 5-2 führen jeweils einem Schweißbrenner 13-1, 13-2 einen Schweißstrom $I_S$ zu.

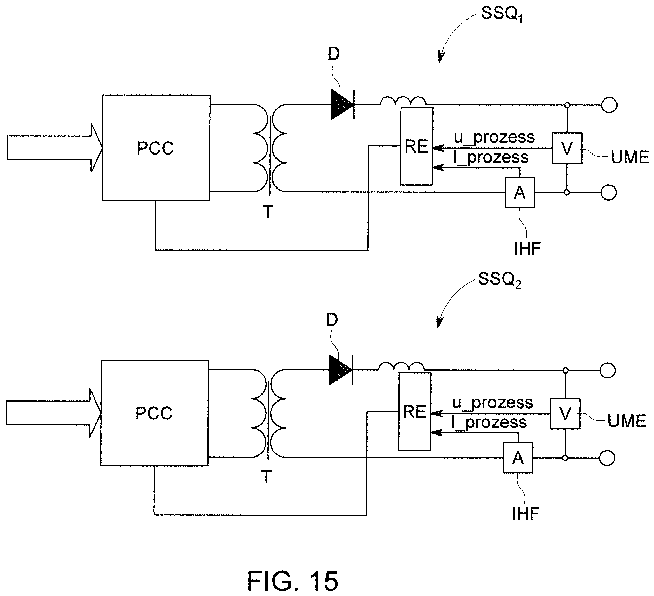

Fig. 15 zeigt schematisch zwei Schweißstromquellen SSQ ohne Vorhandensein einer Koppelkompensation entsprechend dem erfindungsgemäßen Kompensationsverfahren. Wie man in Fig. 15 erkennen kann, sind die beiden Schweißstromkreise SSK voneinander getrennt. Jede Schweißstromquelle SSQ besitzt eine Spannungsmesseinheit UME und eine Strommesseinheit IME, die Messwerte an eine Regeleinheit RE liefern. Die Regeleinheit ist mit einer Leistungskonversionssteuerung (Power conversion control) PCC verbunden. Die Schweißstromquellen SSQ enthalten einen Transformator T und eine Gleichrichterdiode D.

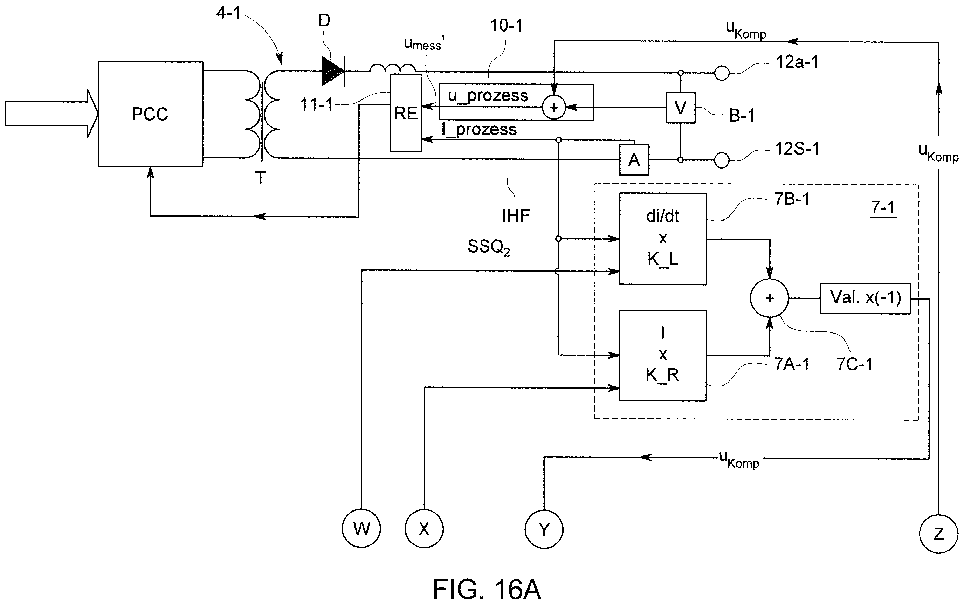

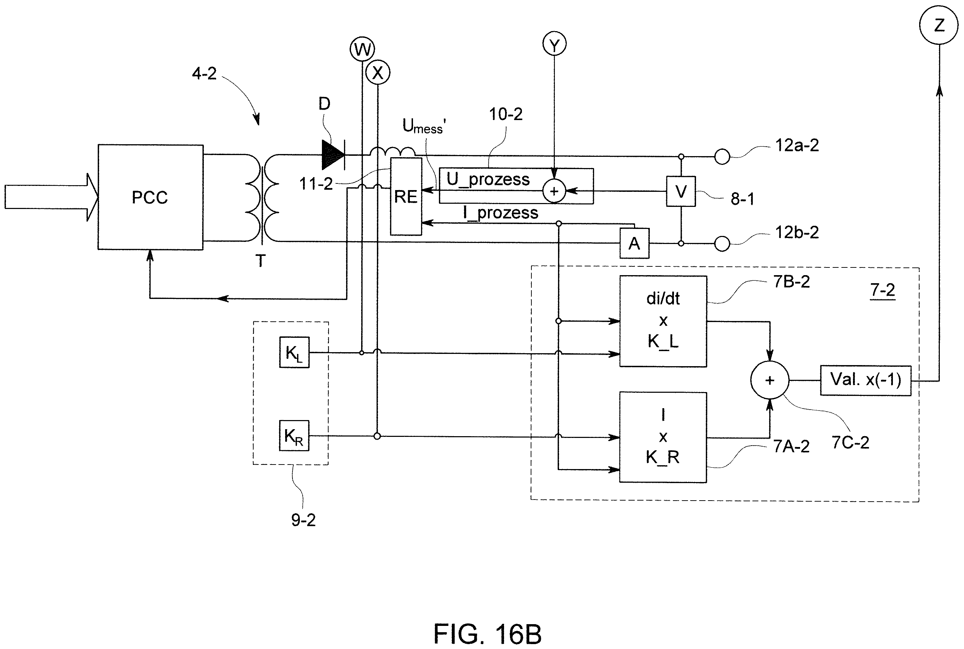

Demgegenüber zeigt Fig. 16 schematisch zwei Schweißstromquellen 4-1, 4-2 einer Schweißanlage 1, bei der das erfindungsgemäße Kompensationsverfahren durchgeführt wird. Jede der beiden in Fig. 16 dargestellten Schweißstromquellen 4-1, 4-2 dient zur Erzeugung eines Schweißstromes, der über eine Schweißstromleitung einem Schweißbrenner 13-1, 13-2 zum Schweißen eines Werkstückes 3 zuführbar ist. Jede der beiden Schweißstromquellen 4-1, 4-2 verfügt über eine Berechnungseinheit 7-1, 7-2 und eine Kompensationseinheit 10-1, 10-2. Die Berechnungseinheiten 7-1, 7-2 bilden Teil der Schweißstromquellen 4-1, 4-2, wie auch in den Fig. 8A, 8B dargestellt. Die Berechnungseinheit 7-i der Schweißstromquelle 4-i ist geeignet, eine Kompensationsspannung $U_{Komp}$ in Abhängigkeit eines durch den Schweißstromverlauf der jeweils anderen zum Schweißen des gleichen Werkstückes 3 eingesetzten Schweißstromquelle hervorgerufenen induzierten und durch die Messeinheit 8-i gemessenen Spannung $U_{Mess}$ sowie in Abhängigkeit gespeicherter Koppelfaktoren KF zu berechnen. Die Kompensationseinheit 10-i der Schweißstromquelle 4-i ist geeignet, die von der Berechnungseinheit 7-i der Schweißstromquelle 4-i berechnete Kompensationsspannung $U_{Komp}$ von der durch die Spannungsmesseinheit 8-i der Schweißstromquelle 4-i gemessenen Messspannung $U_{Mess}$ zur Erzeugung einer bereinigten Messspannung $U'_{Mess}$ zu subtrahieren, die durch eine Regelungseinheit 11-i der Schweißstromquelle 4-i zur Regelung des von der Schweißstromquelle 4-i erzeugten Schweißstromes $I_S$ verwendet wird.

Die Berechnungseinheit 7-i der Schweißstromquelle 4-i berechnet vorzugsweise die Kompensationsspannung $U_{Komp}$ auf Basis eines Stromprofiles SP des von der jeweils anderen Schweißstromquelle bereitgestellten Schweißstromes $I_S$ sowie auf Basis von Koppelfaktoren KF, die vorzugsweise in einem Datenspeicher 9-i der jeweiligen Schweißstromquelle 4-i gespeichert sind. Bei dem in Fig. 16 dargestellten Ausführungsbeispiel ist ein induktiver Koppelfaktor $K_L$ und ein Ohmscher Koppelfaktor $K_R$ in einem lokalen Datenspeicher 9-2 der zweiten Schweißstromquelle 4-2 abgelegt. Diese Koppelfaktoren KF können durch die Berechnungseinheit 7-1 der ersten Schweißstromquelle 4-1 über eine Kommunikationsschnittstelle ausgelesen werden. Alternativ können die Koppelfaktoren $K_R$, $K_L$ auch in beiden Schweißstromquellen 4-1, 4-2 lokal gespeichert sein. Weiterhin ist es möglich, dass die gespeicherten Koppelfaktoren $K_R$, $K_L$ über ein Datennetzwerk aus einem zentralen Datenspeicher ausgelesen werden.

Wie in Fig. 16 dargestellt, verfügt jede der Schweißstromquellen 4-1, 4-2 über eine eigene Berechnungseinheit 7-1, 7-2. Jede der Berechnungseinheiten 7-1, 7-2 weist bei einer bevorzugten Ausführungsform einen ersten Multiplizierer 7A, einen zweiten Multiplizierer 7B sowie einen Summierer 7C auf. Der erste Multiplizierer 7A der Berechnungseinheit 7 multipliziert einen aktuellen Strompegelwert I innerhalb des Stromprofiles mit einem Ohmschen Koppelfaktor $K_R$ zur Berechnung eines Ohmschen Anteils der Kompensationsspannung $U_{KompR}$. Der zweite Multiplizierer 7B der Berechnungseinheit 7 multipliziert eine aktuelle Strompegeländerung di/dt innerhalb des Stromprofiles SP mit einem ausgelesenen induktiven Koppelfaktor $K_L$ zur Berechnung eines induktiven Anteils der Kompensationsspannung $U_{KompL}$. Weiterhin umfasst die Berechnungseinheit 7-i der Schweißstromquelle 4-i jeweils einen Summierer 7B-i, der den Ohmschen Anteil der Kompensationsspannung $U_{KompR}$ und den induktiven Anteil der Kompensationsspannung $U_{KompL}$ zur Berechnung der Kompensationsspannung $U_{Komp}$ addiert. Die auf diese Weise ermittelte Kompensationsspannung $U_{Komp}$ wird jeweils bei dem in Fig. 16 dargestellten Ausführungsbeispiel an die andere Schweißstromquelle übertragen. Jede Schweißstromquelle 4-1, 4-2 verfügt über eine eigene Kompensationseinheit 10-1, 10-2, wie in Fig. 16 gezeigt. Die Kompensationseinheit 10 einer Schweißstromquelle 4 ist derart ausgelegt, dass sie die von der eigenen oder von der Berechnungseinheit 7 der anderen Schweißstromquelle berechnete Kompensationsspannung $U_{Komp}$ erhält und von einer durch die eigene Spannungsmesseinheit 8 der Schweißstromquelle 4 gemessenen Messspannung $U_{Mess}$ zur Ermittlung einer bereinigten Messspannung $U'_{Mess}$ subtrahiert. Diese bereinigte Messspannung $U'_{Mess}$ wird durch die Kompensationseinheit 10-i an eine Regelungseinheit 11-i der Schweißstromquelle 4 angelegt und dient zur Regelung des von der Schweißstromquelle 4 erzeugten Schweißstromes $I_S$.

Bei dem in Fig. 16 dargestellten Ausführungsbeispiel erfolgt die Berechnung der Kompensationsspannung $U_{Komp}$ durch eine Berechnungseinheit der jeweils anderen Schweißstromquelle 4' und die berechnete Kompensationsspannung wird übertragen. Alternativ kann die Berechnung der Kompensationsspannung $U_{Komp}$ auch durch eine eigene Berechnungseinheit 7 aufgrund eines von der anderen Schweißstromquelle 4' über eine Kommunikationsverbindung übertragenen Stromprofils SP erfolgen. Weiterhin kann bei einer weiteren alternativen Ausführungsform die Berechnungseinheit 7 einer Schweißstromquelle 4 ein bekanntes vorgegebenes Stromprofil SP der anderen Schweißstromquelle 4' aus einem lokalen eigenen Datenspeicher 9 der Schweißstromquelle 4 auslesen und mittels der ebenfalls aus dem lokalen Datenspeicher 9 der Schweißstromquelle 4 eingelesenen Koppelfaktoren $K_R$, $K_L$ daraus die Kompensationsspannung bzw. das Kompensationsspannungsprofil berechnen. Bei einer weiteren Ausführungsform wird das Kompensationsspannungsprofil entsprechend der Koppelfaktoren KF und des vordefinierten Stromprofils SP vorab berechnet und in einem lokalen Datenspeicher 9 der Schweißstromquelle abgelegt.

Bei dem in Fig. 16 dargestellten Ausführungsbeispiel erfolgt die Berechnung der Kompensationsspannung $U_{Komp}$ und der bereinigten Messspannung $U_{Mess}$ mithilfe von Multiplizierern 7A, 7B und Summierern 7C der Berechnungseinheit 7 entsprechend vorgegebener Berechnungsformeln. Anstelle hinterlegter und implementierter Berechnungsformeln kann bei einer alternativen Ausführungsform auch eine gespeicherte Lookup-Tabelle LUT verwendet werden.

In der Lookup-Tabelle LUT werden die bei der Koppelfaktorermittlung gemessenen Spannungskorrekturwerte bzw. das Kompensationsspannungsprofil gespeichert. In der Lookup-Tabelle LUT werden die gemessenen Spannungen (z. B. X-Achse) zu den dazugehörigen Strömen I (z. B. Y-Achse) und Stromänderungen (di/dt) (z. B. Z-Achse) eingetragen.

Bei Durchführung des Kompensationsverfahrens während des Schweißprozesses wird dabei der aktuelle Strom-Istwert und der Stromänderungs-Istwert der anderen Schweißstromquelle 4' auf der Y-Achse und der Z-Achse eingetragen, der dazugehörige Spannungswert (X-Achse) ausgelesen und von der eigenen aktuell gemessenen Spannung $U_{Mess}$ subtrahiert.

Es erfolgt vorzugsweise eine Erfassung der einzelnen Koppelwerte (Spannungen für induktive und Ohmsche Kopplung) und deren Speicherung in der Lookup-Tabelle LUT. Wie in Fig. 9 dargestellt, können beide Schweißstromkreise 2-1, 2-2 kurzgeschlossen werden. Die Sender-Schweißstromquelle 4-1 kann beispielsweise ein erstes Stromprofil mit 50 A/ms in einem Bereich von 0 bis 500 A fahren. Die Empfangs-Schweißstromquelle 4-2 misst die eigenen aktuellen Spannungen und die aktuellen Strom- und Stromänderungswerte der Sender-Schweißstromquelle 4-1 und trägt die gemessenen Spannungen bei dem entsprechenden Tabellenpunkt innerhalb der Lookup-Tabelle LUT ein. Dieser Vorgang kann dann mit weiteren Stromprofilen (beispielsweise 100 A/ms und 0 bis 500 A bis 1000 A/ms und 0 bis 500 A) wiederholt werden.

In einem weiteren Schritt erfolgt die eigentliche Kompensation während des Schweißprozesses. Bei der Kompensation während des Schweißprozesses wird der aktuelle Strom-Istwert und Stromänderungs-Istwert der anderen Schweißstromquelle auf der Y-Achse und Z-Achse eingetragen, der dazugehörige Spannungswert (X-Achse) ausgelesen und von der eigenen aktuell gemessenen Spannung subtrahiert.

Diese Kompensation kann beispielsweise zyklisch in regelmäßigen Zeitabständen von beispielsweise 25 μs durchgeführt werden. Tabellenzwischenwerte können vorzugsweise linear interpoliert werden.

Die nachstehende Tabelle zeigt ein Beispiel für auftretende Koppelspannungen (bzw. Kompensationsspannungen) in Volt für die Werte von R_koppel = 25 mOhm und L_koppel = 20uH

| Strom/di_dt | 0 | 100 | 200 | 300 | 400 | 500 | 600 | 700 | 800 | 900 | 1000 | [A/ms] |
|---|---|---|---|---|---|---|---|---|---|---|---|---|
| 0 | 0,000 | 2,000 | 4,000 | 6,000 | 8,000 | 10,000 | 12,000 | 14,000 | 16,000 | 18,000 | 20,000 | |
| 50 | 1,250 | 3,250 | 5,250 | 7,250 | 9,250 | 11,250 | 13,250 | 15,250 | 17,250 | 19,250 | 21,250 | |
| 100 | 2,500 | 4,500 | 6,500 | 8,500 | 10,500 | 12,500 | 14,500 | 16,500 | 18,500 | 20,500 | 22,500 | |
| 150 | 3,750 | 5,750 | 7,750 | 9,750 | 11,750 | 13,750 | 15,750 | 17,750 | 19,750 | 21,750 | 23,750 | |
| 200 | 5,000 | 7,000 | 9,000 | 11,000 | 13,000 | 15,000 | 17,000 | 19,000 | 21,000 | 23,000 | 25,000 | |
| 250 | 6,250 | 8,250 | 10,250 | 12,250 | 14,250 | 16,250 | 18,250 | 20,250 | 22,250 | 24,250 | 26,250 | |
| 300 | 7,500 | 9,500 | 11,500 | 13,500 | 15,500 | 17,500 | 19,500 | 21,500 | 23,500 | 25,500 | 27,500 | |
| 350 | 8,750 | 10,750 | 12,750 | 14,750 | 16,750 | 18,750 | 20,750 | 22,750 | 24,750 | 26,750 | 28,750 | |
| 400 | 10,000 | 12,000 | 14,000 | 16,000 | 18,000 | 20,000 | 22,000 | 24,000 | 26,000 | 28,000 | 30,000 | |
| 450 | 11,250 | 13,250 | 15,250 | 17,250 | 19,250 | 21,250 | 23,250 | 25,250 | 27,250 | 29,250 | 31,250 | |
| 500 | 12,500 | 14,500 | 16,500 | 18,500 | 20,500 | 22,500 | 24,500 | 26,500 | 28,500 | 30,500 | 32,500 | |
| [A] | | | | | | | | | | | | |

Es kann auch mehrere LUT (Lookup-Tabelle) geben, die situationsabhängig ausgewählt werden. Bei Roboter-Portalanlagen kann sich die Koppelinduktivität je nach Position der einzelnen auf den Fahrbahnen montierten Roboter ändern, da sich die Lage der Schweißkabel 5-1, 5-2 zueinander ändert. Darum ist es auch möglich, dass in Anhängigkeit der Roboterpositionen zueinander die Koppelfaktoren oder Kompensationsspannungen aus weiteren LUT ausgewählt werden. Die vorausgehende Ermittlung der Koppelfaktoren KF erfolgt dann ebenfalls an mehreren von Anwender festgelegten Roboterpositionen. Die Anwahl der LUT erfolgt vorzugsweise von einer Steuerung des Roboters aus.

Durch das erfindungsgemäße Kompensationsverfahren kann die Qualität des Schweißprozesses erheblich gesteigert werden, d. h. die aufgrund des Schweißprozesses entstehende Schweißnaht wird qualitativ verbessert, da störende Beeinflussungen von einer anderen Schweißstromquelle, die zum Schweißen des gleichen Werkstückes 3 eingesetzt wird, reduziert bzw. kompensiert werden. Das erfindungsgemäße Kompensationsverfahren kann digital, aber auch analog ausgeführt werden. Das erfindungsgemäße Kompensationsverfahren eignet sich insbesondere für Schweißanlagen 1, in denen mehrere Schweißstromquellen 4-i gleichzeitig in einer Anlage/Zelle schweißen. Die dabei auftretenden Spannungseinkopplungen haben zur Folge, dass die gemessene Spannung $U_{Mess}$, welche als Regelgröße verwendet wird, verfälscht wird. Durch das erfindungsgemäße Kompensationsverfahren wird die Messspannung $U_{Mess}$ von Störgrößen bereinigt. Hierdurch wird das Schweißergebnis der Schweißanlage 1 deutlich verbessert.

Über die berechneten Koppelfaktoren $K_R$, $K_L$ erhält zudem der Nutzer bzw. Anwender der Schweißanlage 1 Informationen über das Ausmaß der störenden Kopplung zwischen Schweißstromkreisen der Schweißanlage 1. Die berechneten Koppelfaktoren $K_R$, $K_L$ werden bei einer möglichen Ausführungsform des erfindungsgemäßen Kompensationsverfahrens benutzt, um eine störende Beeinflussung eines von einer Schweißstromquelle zum Schweißen eines Werkstückes 3 bereitgestellten Schweißstromes $I_S$ durch die zum Schweißen des gleichen Werkstückes 3 eingesetzte andere Schweißstromquelle zu reduzieren bzw. zu beseitigen. Andererseits kann ein Nutzer der Schweißanlage 1 die berechneten bzw. ermittelten Koppelfaktoren $K_R$, $K_L$ heranziehen, um die Schweißanlage 1 selbst zu optimieren, insbesondere die Verlegung der Leitungen der verschiedenen Schweißstromkreise 2-i. Über eine Anzeige der Schweißstromquellen kann ein Nutzer über die Höhe der induktiven und/oder Ohmschen Kopplung zwischen den Schweißstromkreisen 2-i informiert werden. Das erfindungsgemäße Verfahren zum Ermitteln einer störenden Kopplung zwischen Schweißstromkreisen 2-i einer Schweißanlage 1 eignet sich insbesondere für Schweißanlagen 1 mit zwei oder mehr Schweißstromkreisen 2-i bzw. Schweißstromquellen 4-i.

**Patentansprüche**

1. Verfahren zum Kompensieren einer störenden Beeinflussung eines von einer Schweißstromquelle (4) zum Schweißen eines Werkstückes (3) bereitgestellten Schweißstromes durch eine andere Schweißstromquelle (4'), mit den Schritten:

   (a) Bereitstellen (SA) einer Kompensationsspannung ($U_{Komp}$), die auf Basis eines von der anderen Schweißstromquelle (4') bereitgestellten Schweißstromverlaufes berechnet wird;
   (b) Subtrahieren (SB) der Kompensationsspannung ($U_{Komp}$) von einer durch eine Spannungsmesseinheit (8) der Schweißstromquelle (4) gemessenen Messspannung ($U_{Mess}$) zur Ermittlung einer bereinigten Messspannung ($U'_{Mess}$); und
   (c) Regeln (SC) des von der Schweißstromquelle (4) erzeugten Schweißstromes in Abhängigkeit von der bereinigten Messspannung ($U'_{Mess}$).

2. Verfahren nach Anspruch 1,
   **wobei** die Kompensationsspannung ($U_{Komp}$) auf Basis eines Stromprofiles (SP) des von der anderen Schweißstromquelle (4') bereitgestellten Schweißstromverlaufes und auf Basis gespeicherter Koppelfaktoren (KF) berechnet wird.

3. Verfahren nach Anspruch 2,
   **wobei** die gespeicherten Koppelfaktoren (KF) einen Ohmschen Koppelfaktor ($K_R$) und mindestens einen induktiven Koppelfaktor ($K_L$) aufweisen.

4. Verfahren nach einem der vorangehenden Ansprüche 2 oder 3,
   **wobei** die Kompensationsspannung ($U_{Komp}$) entsprechend dem Schweißstromverlauf der anderen Schweißstromquelle (4') aus einem Datenspeicher (9) der Schweißstromquelle (4) ausgelesen wird.

5. Verfahren nach einem der vorangehenden Ansprüche 2 oder 3,
   **wobei** das Stromprofil (SP) des Schweißstromverlaufes der anderen Schweißstromquelle (4') von der anderen Schweißstromquelle (4') drahtlos oder drahtgebunden an die Schweißstromquelle (4) übertragen wird.

6. Verfahren nach einem der vorangehenden Ansprüche 2 bis 5,
   **wobei** das Stromprofil (SP) des Schweißstromverlaufes der anderen Schweißstromquelle (4') Strompegelwerte und Strompegeländerungen mit zugehörigen Zeitwerten umfasst.

7. Verfahren nach einem der vorangehenden Ansprüche 2 bis 6,
   **wobei** die von einer Berechnungseinheit (7) berechnete Kompensationsspannung ($U_{Komp}$) durch eine Kompensationseinheit (10) der Schweißstromquelle (4) laufend von der durch die Spannungsmesseinheit (8) der Schweißstromquelle (4) gemessenen Messspannung ($U_{Mess}$) zur Ermittlung der bereinigten Messspannung ($U'_{Mess}$) subtrahiert wird.

8. Verfahren nach einem der vorangehenden Ansprüche 1 bis 7,
   **wobei** das Berechnen (SA) der Kompensationsspannung ($U_{Komp}$) und das Ermitteln (SB) der bereinigten Messspannung ($U'_{Mess}$) analog oder digital ausgeführt wird.

9. Verfahren nach einem der vorangehenden Ansprüche 1 bis 8,
   **wobei** der mittels der bereinigten Messspannung ($U'_{Mess}$) durch eine Regeleinheit (11) geregelte Schweißstrom über eine Schweißstromleitung (5) der Schweißstromquelle (4) einem Schweißbrenner (13) zum Schweißen des Werkstückes (3) zugeleitet wird.

10. Schweißstromquelle (4) zur Erzeugung eines Schweißstromes, der über eine Schweißstromleitung (5) einem Schweißbrenner (13) zum Schweißen mindestens eines Werkstückes (3) zuführbar ist, **wobei** die Schweißstromquelle (4) aufweist:

- eine Berechnungseinheit (7), welche geeignet ist, eine Kompensationsspannung ($U_{Komp}$) in Abhängigkeit eines Schweißstromverlaufes einer anderen Schweißstromquelle (4') zu berechnen, und
- eine Kompensationseinheit (10), welche geeignet ist, die von der Berechnungseinheit (7) berechnete Kompensationsspannung ($U_{Komp}$) von einer durch eine Spannungsmesseinheit (8) der Schweißstromquelle (4) gemessenen Messspannung ($U_{Mess}$) zur Ermittlung einer bereinigten Messspannung ($U'_{Mess}$) zu subtrahieren, die durch eine Regelungseinheit (11) der Schweißstromquelle (4) zur Regelung des von der Schweißstromquelle (4) erzeugten Schweißstromes verwendet wird.

11. Schweißstromquelle nach Anspruch 10,
**wobei** die Berechnungseinheit (7) der Schweißstromquelle (4) die Kompensationsspannung ($U_{Komp}$) auf Basis eines Stromprofils (SP) des von der anderen Schweißstromquelle (4') bereitgestellten Schweißstromes sowie auf Basis von Koppelfaktoren (KF) berechnet, die in einem Datenspeicher (9) der Schweißstromquelle (4) gespeichert sind oder über eine Schnittstelle von einem Datenspeicher einer anderen Schweißstromquelle (4') oder von einer Datenbank empfangen werden.

12. Schweißstromquelle nach einem der vorangehenden Ansprüche 10 oder 11,
**wobei** das Stromprofil (SP) des Schweißstromes der anderen Schweißstromquelle (4') Strompegelwerte und Strompegeländerungen mit zugehörigen Zeitwerten umfasst.

13. Schweißstromquelle nach einem der vorangehenden Ansprüche 10 bis 12,
**wobei** ein Stromprofil (SP) des Schweißstromes der anderen Schweißstromquelle (4') über eine drahtlose oder drahtgebundene Schnittstelle der Schweißstromquelle (4) von der anderen Schweißstromquelle (4') empfangen wird.

14. Schweißstromquelle nach einem der vorangehenden Ansprüche 10 bis 13,
**wobei** die zur Berechnung der Kompensationsspannung ($U_{Komp}$) vorgesehene Berechnungseinheit (7) der Schweißstromquelle (4) aufweist:

- einen ersten Multiplizierer (7A), der einen aktuellen Strompegelwert innerhalb des Stromprofils mit einem Ohmschen Koppelfaktor ($K_R$) zur Berechnung eines Ohmschen Anteils der Kompensationsspannung ($U_{KompR}$) multipliziert,
- einen zweiten Multiplizierer (7B), der eine aktuelle Strompegeländerung innerhalb des Stromprofils mit einem induktiven Koppelfaktor ($K_L$) zur Berechnung eines induktiven Anteils der Kompensationsspannung ($U_{KompL}$) multipliziert, und
- einen Summierer (7C), der den Ohmschen Anteil der Kompensationsspannung ($U_{KompR}$) und den induktiven Anteil der Kompensationsspannung ($U_{KompL}$) zur Berechnung der Kompensationsspannung ($U_{Komp}$) addiert.

15. Schweißanlage (1) mit mindestens zwei Schweißstromquellen (4) nach einem der vorangehenden Ansprüche 10 bis 14, die zum Schweißen von einem oder mehreren Werkstücken (3) gemeinsam gleichzeitig betrieben werden.

FIG. 1

FIG. 2

FIG. 3

FIG. 4

SSQ
SSk
Rsk    Usk
Ua
L    UL
LB    Upuls

FIG. 5

SSQ 1    SSQ 2
11    12
Ugen2    Ugen1
SSk₁    SSk₂
SB    SB
LB    LB
WS
12    11
Ua1    Ua2

FIG. 6

FIG. 7

FIG. 8A

FIG. 8B

FIG. 9

EP 3 616 823 A1

FIG. 10

V/A

U_L+U_r

$$\frac{U\_empf\_ind}{di/dt\_sender} = L\_kopp$$

Strompuls
i_sender [100A/div]                    I₁

Spannung an
Empfänger ohne
korrektur                              U₂

0V

Spannung an
Empfänger abzügl.
Ohmscher Anteil                        U₂'

1V/div

0A

t

t₀  t₁

MF₂

## FIG. 11

S_A

S_B

S_C

## FIG. 12

V/A

Strompuls
I_sender [100A/div]

$I_1$    I

Spannung an Empfänger vor Anwendung
des Kompensationsverfahrens

II    III    $u_2$ $u_2'$

0V

0A

1V/div

Spannung an Empfänger nach Anwendung
des Kompensationsverfahrens

t

## FIG. 13

1

I    t    u    t

4-1    4-2

I    t    u    t

6-1    12b-1    6-2    12a-2
12a-1    12b-2

5-1    I

13-1    13-2    5-2

K    3

Gemeinsames Leitungsstück
ohmscher + Ind. Anteil

## FIG. 14

FIG. 15

FIG. 16A

FIG. 16B

**Europäisches Patentamt**

**European Patent Office**

**Office européen des brevets**

## EUROPÄISCHER RECHERCHENBERICHT

**Nummer der Anmeldung**

EP 18 19 1800

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 00/74888 A1 (FRONIUS SCHWEISSMASCH PROD [AT]; ARTELSMAIR JOSEF [AT]; BRUNNER MICHAE) 14. Dezember 2000 (2000-12-14) * Seite 5, Zeile 7 - Seite 7, Zeile 30 * ----- | 1-15 | INV. B23K9/10 B23K9/173 |
| A | EP 1 977 847 A1 (LINDE AG [DE]) 8. Oktober 2008 (2008-10-08) * Zusammenfassung; Abbildungen * ----- | 1-15 | |

**RECHERCHIERTE SACHGEBIETE (IPC)**

B23K

Der vorliegende Recherchenbericht wurde für alle Patentansprüche erstellt

| Recherchenort | Abschlußdatum der Recherche | Prüfer |
|---|---|---|
| München | 12. März 2019 | Caubet, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 19 1800

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2019

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 0074888 | A1 | | 14-12-2000 | AT | 273101 | T | 15-08-2004 |
| | | | | AT | 409833 | B | 25-11-2002 |
| | | | | AU | 5371200 | A | 28-12-2000 |
| | | | | DE | 50007391 | D1 | 16-09-2004 |
| | | | | DK | 1183125 | T3 | 15-11-2004 |
| | | | | EP | 1183125 | A1 | 06-03-2002 |
| | | | | ES | 2225155 | T3 | 16-03-2005 |
| | | | | US | 6710297 | B1 | 23-03-2004 |
| | | | | WO | 0074888 | A1 | 14-12-2000 |
| EP 1977847 | A1 | | 08-10-2008 | AT | 469719 | T | 15-06-2010 |
| | | | | DE | 102007016103 | A1 | 09-10-2008 |
| | | | | EP | 1977847 | A1 | 08-10-2008 |
| | | | | US | 2008245781 | A1 | 09-10-2008 |

EPO FORM P0461

Für nähere Einzelheiten zu diesem Anhang : siehe Amtsblatt des Europäischen Patentamts, Nr.12/82